# EUROPEAN PATENT APPLICATION

(11) **EP 4 701 295 A1**
(43) Date of publication of application: **25.02.2026**
(21) Application number: 24814072.5
(22) Date of filing: 29.04.2024
(51) Int. Cl.: H04W 64/00, H04W 4/02

(54) **SIGNAL MEASURING AND REPORTING METHOD, POSITIONING METHOD, AND RELATED APPARATUS**

(30) Priority: 31.05.2023 CN 202310641787
(71) Applicant: Huawei Technologies Co., Ltd., Shenzhen, Guangdong 518129 (CN)
(72) Inventor: LI, Cheng, Shenzhen, Guangdong 518129 (CN)
(74) Representative: Körber, Martin Hans
(86) International application number: PCT/CN2024/090487
(87) International publication number: WO 2024/244866

(57) **Abstract**

Embodiments of this application disclose a signal measurement and reporting method, a positioning method, and a related apparatus, for a first device to send a first measurement result and information about a first propagation path to a positioning device. This helps improve accuracy of positioning the first device or a second device by the positioning device. The method in embodiments of this application includes: The first device measures a positioning reference signal sent by the second device, to obtain the first measurement result, where the first measurement result corresponds to the first propagation path, and the first propagation path is a propagation path between the first device and the second device; and the first device sends the first measurement result and the information about the first propagation path to the positioning device.

## Description

This application claims priority to Chinese Patent Application No. 202310641787.9, filed with the China National Intellectual Property Administration on May 31, 2023 and entitled "SIGNAL MEASUREMENT AND REPORTING METHOD, POSITIONING METHOD, AND RELATED APPARATUS", which is incorporated herein by reference in its entirety.

### TECHNICAL FIELD

This application relates to the field of communication technologies, and in particular, to a signal measurement and reporting method, a positioning method, and a related apparatus.

### BACKGROUND

Cellular positioning is one of key technologies of a 5th generation (5th Generation, 5G) mobile communication system. A location of a terminal device can be accurately identified through cellular positioning, to provide various location-based services for the terminal device, for example, navigation, delivery, and industrial robots.

A principle of the cellular positioning is to obtain a location relationship between each of a plurality of base stations and the terminal device by measuring a line of sight (line of sight, LOS) distance between each of the plurality of base stations and the terminal device, and then obtain the location of the terminal device through solving based on a location of at least one of the plurality of base stations. However, in an actual environment, due to existence of various obstacles, for example, a tree, a building, or a wall, the LOS distance between each of the plurality of base stations and the terminal device usually cannot be obtained through measurement, but a non line of sight (non line of sight, NLOS) distance between each of the plurality of base stations and the terminal device is obtained through measurement. An LOS distance between a base station and the terminal device is a straight-line distance between the base station and the terminal device or a distance of an LOS path obtained by directly transmitting, to the terminal device, a positioning reference signal sent by the base station to the terminal device. An NLOS distance between a base station and the terminal device is a distance of an NLOS path obtained by reflecting, via a reflector, a positioning reference signal sent by the base station to the terminal device. The terminal device measures the positioning reference signal to obtain a measurement result of the NLOS path, and the terminal device measures the positioning reference signal to obtain a measurement result of the LOS path. There is a large deviation between the measurement result of the NLOS path and the measurement result of the LOS path.

Therefore, in an NLOS scenario, how to implement high-accuracy positioning on a terminal device is an urgent problem to be resolved.

### SUMMARY

Embodiments of this application provide a signal measurement and reporting method, a positioning method, and a related apparatus, for a first device to send a first measurement result and information about a first propagation path to a positioning device. This helps improve accuracy of positioning the first device or a second device by the positioning device.

According to a first aspect of this application, a signal measurement and reporting method is provided, including the following steps.

A first device measures a positioning reference signal sent by a second device, to obtain a first measurement result, where the first measurement result corresponds to a first propagation path, and the first propagation path is a propagation path between the first device and the second device; and the first device sends the first measurement result and information about the first propagation path to a positioning device. In this way, the positioning device learns of the information about the propagation path corresponding to the first measurement result. The first propagation path is any propagation path between the first device and the second device. This helps improve accuracy of positioning the first device or the second device by the positioning device. For example, this helps enable the positioning device to position the first device or the second device based on a plurality of measurement results that are reported by the first device and that have same propagation path information, to implement high-accuracy positioning on the first device or the second device. This helps improve accuracy of positioning a terminal device in an NLOS scenario.

According to a second aspect of this application, a positioning method is provided, including the following steps.

A positioning device receives a first measurement result and information about a first propagation path from a first device, where the first measurement result is a measurement result obtained by the first device by measuring a positioning reference signal sent by a second device, the first measurement result corresponds to the first propagation path, and the first propagation path is a propagation path between the first device and the second device; and the positioning device positions the first device or the second device based on the first measurement result and the information about the first propagation path. The first propagation path is any propagation path between the first device and the second device. Therefore, this helps improve accuracy of positioning the first device or a second device by the positioning device. For example, this helps enable the positioning device to position the first device or the second device based on a plurality of measurement results that are reported by the first device and that have same propagation path information, to implement high-accuracy positioning on the first device or the second device. This helps improve accuracy of positioning a terminal device in an NLOS scenario.

According to the first aspect or the second aspect, in a possible implementation, the information about the first propagation path includes at least one of the following: a label of the first propagation path, an identifier of the first propagation path, a random value of the first propagation path, a name of the first propagation path, information about a reflector associated with the first propagation path, information about a reflective surface associated with the first propagation path, a temporary identifier (random path temporary identifier, RPTI) of the first propagation path, a priority of the first propagation path, or information about at least one receive beam associated with the first propagation path. It can be learned from this implementation that some possible content of the information about the first propagation path is provided. Specifically, the first propagation path may be indicated by the label, the name, the random value, the associated reflector or reflective surface, the RPTI, or the information about the at least one associated receive beam of the first propagation path. The information about the at least one receive beam may be understood as information about a path-level receive beam. In other words, the first device measures the positioning reference signal to obtain the at least one receive beam used for the measurement result of the first propagation path. Therefore, it is convenient for the positioning device to determine the information about the first propagation path corresponding to the first measurement result, and it is convenient for the positioning device to position the first device or the second device based on the information about the first propagation path, thereby improving positioning accuracy.

According to the first aspect or the second aspect, in a possible implementation, the information about the at least one receive beam associated with the first propagation path includes at least one of the following: a beam identifier, an angle value, or an angle range of the at least one receive beam associated with the first propagation path. In this implementation, some possible content included in the information about the at least one receive beam is shown. Specifically, the at least one receive beam may be indicated by the beam identifier, the angle value, or the angle range. Therefore, it is convenient for the positioning device to determine the information about the path-level receive beam corresponding to the first measurement result. This facilitates high-accuracy positioning on the terminal device by the positioning device.

According to the first aspect or the second aspect, in a possible implementation, the at least one receive beam is a path-level receive beam. In this implementation, the first device measures the positioning reference signal to obtain the at least one receive beam used for the measurement result of the first propagation path. The at least one receive beam may be understood as a path-level receive beam, and is associated with the first propagation path.

According to the first aspect, in a possible implementation, the method further includes: The first device measures a positioning reference signal from the second device, to obtain a second measurement result, where the second measurement result corresponds to a second propagation path, and the second propagation path is a propagation path between the first device and the second device; and the first device sends the second measurement result and information about the second propagation path to the positioning device. In this implementation, the first device may report a plurality of measurement results and information about corresponding propagation paths. Therefore, it is convenient for the positioning device to perform high-accuracy positioning on the first device or the second device based on the plurality of measurement results and the information about the corresponding propagation paths.

According to the first aspect, in a possible implementation, an association between the information about the second propagation path and the information about the first propagation path indicates an association between the first measurement result and the second measurement result. Alternatively, in other words, the information about the second propagation path and the information about the first propagation path indicate the association between the first measurement result and the second measurement result. Therefore, it is convenient for the positioning device to consider, based on the association between the information about the first propagation path and the information about the second propagation path, whether to position the first device or the second device by combining the first measurement result and the second measurement result. For example, if the information about the first propagation path is associated with the information about the second propagation path, it indicates that the first measurement result is associated with the second measurement result. The positioning device positions the first device or the second device by combining the first measurement result and the second measurement result. This helps improve positioning accuracy. Especially in an NLOS scenario, if the information about the first propagation path is associated with the information about the second propagation path, this helps enable the positioning device to perform NLOS positioning, to improve positioning accuracy in the NLOS scenario.

According to the first aspect, in a possible implementation, when the information about the second propagation path is partially or completely the same as the information about the first propagation path, it indicates that the first measurement result is associated with the second measurement result. In this implementation, that the information about the second propagation path is associated with the information about the first propagation path is represented as that the information about the second propagation path is partially or completely the same as the information about the first propagation path. If the information about the second propagation path is partially or completely the same as the information about the first propagation path, it is helpful for the positioning device to determine, based on the first measurement result and the second measurement result, a change of a measurement parameter obtained by the first device by measuring the positioning reference signal. In the NLOS scenario, this helps improve accuracy of positioning the terminal device by the positioning device.

According to the first aspect, in a possible implementation, when the information about the second propagation path is partially or completely different from the information about the first propagation path, it indicates that the first measurement result is not associated with the second measurement result. In this implementation, if the information about the second propagation path is partially or completely different from the information about the first propagation path, the first measurement result is not associated with the second measurement result. In this case, the positioning device needs to separately use the first measurement result or the second measurement result to perform positioning.

According to the second aspect, in a possible implementation, the method further includes: The positioning device receives a second measurement result and information about a second propagation path from the first device, where the second measurement result is a measurement result obtained by the first device by measuring, at a second moment, a positioning reference signal sent by the second device, the second measurement result corresponds to the second propagation path, and the second propagation path is a propagation path between the first device and the second device. That the positioning device positions the first device or the second device based on the first measurement result and the information about the first propagation path includes: The positioning device positions the first device or the second device based on the first measurement result, the second measurement result, the information about the first propagation path, and the information about the second propagation path. It can be learned that, the first device reports a plurality of measurement results and information about corresponding propagation paths to the positioning device, to help the positioning device to position the first device or the second device based on measurement results at a plurality of moments and the information about the propagation paths. This helps improve positioning accuracy.

According to the second aspect, in a possible implementation, that the positioning device positions the first device or the second device based on the first measurement result, the second measurement result, the information about the first propagation path, and the information about the second propagation path includes: When the information about the second propagation path is partially or completely the same as the information about the first propagation path, the positioning device determines that the first measurement result is associated with the second measurement result, and the positioning device positions the first device or the second device based on the first measurement result and the second measurement result; or when the information about the second propagation path is partially or completely different from the information about the first propagation path, the positioning device determines that the first measurement result is not associated with the second measurement result, and the positioning device positions the first device or the second device separately based on the first measurement result or the second measurement result. In this implementation, that the information about the second propagation path is associated with the information about the first propagation path is represented as that the information about the second propagation path is partially or completely the same as the information about the first propagation path. If the information about the second propagation path is partially or completely the same as the information about the first propagation path, it indicates that the first measurement result is associated with the second measurement result. It is helpful for the positioning device to determine, based on the first measurement result and the second measurement result, a change of a measurement parameter obtained by the first device by measuring the positioning reference signal. In the NLOS scenario, this helps improve accuracy of positioning the terminal device by the positioning device.

According to a third aspect of this application, a first communication apparatus is provided, including:
a processing module, configured to measure a positioning reference signal sent by a second device, to obtain a first measurement result, where the first measurement result corresponds to a first propagation path, and the first propagation path is a propagation path between the first communication apparatus and the second device; and a transceiver module, configured to send the first measurement result and information about the first propagation path to the first communication apparatus.

According to a fourth aspect of this application, a second communication apparatus is provided, including:
a transceiver module, configured to receive a first measurement result and information about a first propagation path from a first communication apparatus, where the first measurement result is a measurement result obtained by the first communication apparatus by measuring a positioning reference signal sent by a second device, the first measurement result corresponds to the first propagation path, and the first propagation path is a propagation path between the first communication apparatus and the second device; and
a processing module, configured to position the first communication apparatus or the second device based on the first measurement result and the information about the first propagation path.

According to the third aspect or the fourth aspect, in a possible implementation, the information about the first propagation path includes at least one of the following: a label of the first propagation path, an identifier of the first propagation path, a random value of the first propagation path, a name of the first propagation path,
information about a reflector associated with the first propagation path, information about a reflective surface associated with the first propagation path, an RPTI of the first propagation path, a priority of the first propagation path, or information about at least one receive beam associated with the first propagation path.

According to the third aspect or the fourth aspect, in a possible implementation, the information about the at least one receive beam associated with the first propagation path includes at least one of the following: a beam identifier, an angle value, or an angle range of the at least one receive beam associated with the first propagation path.

According to the third aspect or the fourth aspect, in a possible implementation, the at least one receive beam is a path-level receive beam.

According to the third aspect, in a possible implementation, the processing module is further configured to measure a positioning reference signal from the second device, to obtain a second measurement result, where the second measurement result corresponds to a second propagation path, and the second propagation path is a propagation path between the first communication apparatus and the second device; and the transceiver module is further configured to send the second measurement result and information about the second propagation path to a second communication apparatus.

According to the third aspect, in a possible implementation, an association between the information about the second propagation path and the information about the first propagation path indicates an association between the first measurement result and the second measurement result.

According to the third aspect, in a possible implementation, when the information about the second propagation path is partially or completely the same as the information about the first propagation path, it indicates that the first measurement result is associated with the second measurement result.

According to the third aspect, in a possible implementation, when the information about the second propagation path is partially or completely different from the information about the first propagation path, it indicates that the first measurement result is not associated with the second measurement result.

According to the fourth aspect, in a possible implementation, the transceiver module is further configured to receive a second measurement result and information about a second propagation path from the first communication apparatus, where the second measurement result is a measurement result obtained by the first communication apparatus by measuring a positioning reference signal sent by the second device, the second measurement result corresponds to the second propagation path, and the second propagation path is a propagation path between the first communication apparatus and the second device; and the processing module is specifically configured to position the first communication apparatus or the second device based on the first measurement result, the second measurement result, the information about the first propagation path, and the information about the second propagation path.

According to the fourth aspect, in a possible implementation, the processing module is specifically configured to: when the information about the second propagation path is partially or completely the same as the information about the first propagation path, determine that the first measurement result is associated with the second measurement result, and position the first communication apparatus or the second device based on the first measurement result and the second measurement result; or
when the information about the second propagation path is partially or completely different from the information about the first propagation path, determine that the first measurement result is not associated with the second measurement result, and position the first communication apparatus or the second device separately based on the first measurement result or the second measurement result.

According to a fifth aspect of this application, a communication apparatus is provided. The communication apparatus includes a processor and a memory. The memory stores a computer program or computer instructions, and the processor is configured to invoke and run the computer program or the computer instructions stored in the memory, so that the processor implements any one of the implementations of the first aspect or the second aspect.

Optionally, the communication apparatus further includes a transceiver. The processor is configured to control the transceiver to receive and send a signal.

According to a sixth aspect of this application, a communication apparatus is provided. The communication apparatus includes a processor. The processor is configured to invoke a computer program or computer instructions stored in a memory, so that the processor implements any one of the implementations of the first aspect or the second aspect.

Optionally, the communication apparatus further includes a transceiver. The processor is configured to control the transceiver to receive and send a signal.

According to a seventh aspect of this application, a communication apparatus is provided. The communication apparatus includes a processor, and the processor is configured to perform any one of the implementations of the first aspect or the second aspect.

According to an eighth aspect of this application, a computer program product including instructions is provided. When the computer program product runs on a computer, the computer is enabled to perform any one of the implementations of the first aspect or the second aspect.

According to a ninth aspect of this application, a computer-readable storage medium is provided, including computer instructions. When the instructions are run on a computer, the computer is enabled to perform any one of the implementations of the first aspect or the second aspect.

According to a tenth aspect of this application, a chip apparatus is provided, including a processor, configured to invoke a computer program or computer instructions in a memory, so that the processor performs any one of the implementations of the first aspect or the second aspect.

Optionally, the processor is coupled to the memory through an interface.

According to an eleventh aspect of this application, a communication system is provided. The communication system includes the first communication apparatus according to the third aspect and the second communication apparatus according to the fourth aspect.

### BRIEF DESCRIPTION OF DRAWINGS

FIG. 1 is a diagram of a communication system according to an embodiment of this application;
FIG. 2 is a diagram of a cellular positioning method;
FIG. 3 is a diagram of an embodiment of a signal measurement and reporting method and a positioning method according to an embodiment of this application;
FIG. 4 is a diagram of a scenario of a signal measurement and reporting method according to an embodiment of this application;
FIG. 5 is a diagram of another scenario of a signal measurement and reporting method according to an embodiment of this application;
FIG. 6 is a diagram of another scenario of a signal measurement and reporting method according to an embodiment of this application;
FIG. 7 is a diagram of another scenario of a signal measurement and reporting method according to an embodiment of this application;
FIG. 8A is a diagram of another scenario of a signal measurement and reporting method according to an embodiment of this application;
FIG. 8B is a diagram of another scenario of a signal measurement and reporting method according to an embodiment of this application;
FIG. 9 is a diagram of a structure of a communication apparatus according to an embodiment of this application;
FIG. 10 is a diagram of another structure of a communication apparatus according to an embodiment of this application;
FIG. 11 is a diagram of another structure of a communication apparatus according to an embodiment of this application;
FIG. 12 is a diagram of a structure of a terminal device according to an embodiment of this application; and
FIG. 13 is a diagram of a structure of a base station according to an embodiment of this application.

### DESCRIPTION OF EMBODIMENTS

Embodiments of this application provide a signal measurement and reporting method, a positioning method, and a related apparatus, for a first device to send a first measurement result and information about a first propagation path to a positioning device. This helps improve accuracy of positioning the first device or a second device by the positioning device.

Reference to "an embodiment", "some embodiments", or the like described in this application indicates that one or more embodiments of this application include a specific feature, structure, or feature described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may represent a, b, c, a and b, a and c, b and c, or a, b, and c, where a, b, and c may be singular or plural.

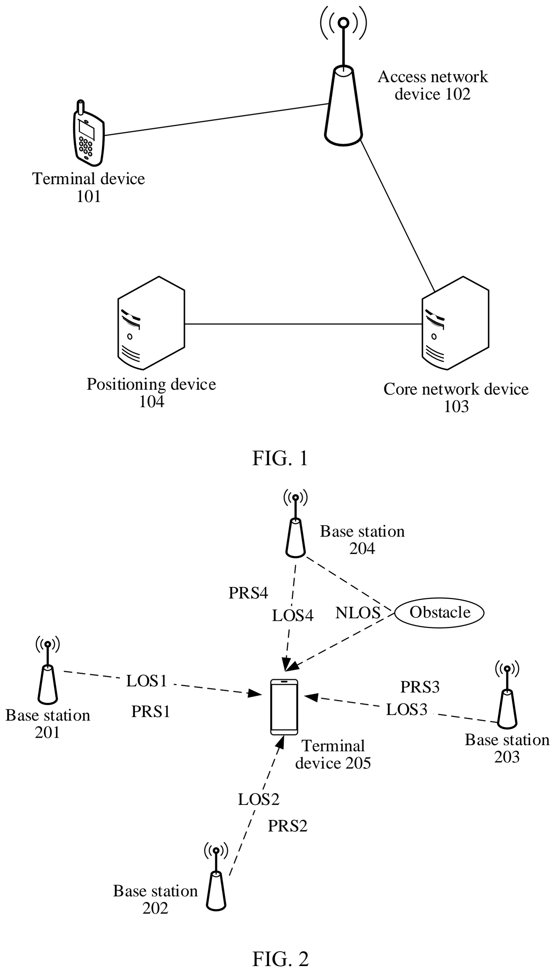

FIG. 1 is a diagram of a communication system according to an embodiment of this application. As shown in FIG. 1, the communication system includes a terminal device 101, an access network device 102, a core network device 103, and a positioning device 104.

Optionally, the terminal device 101 is connected to the access network device 102 through an interface, and the access network device 102 is connected to the core network device 103 through an interface. The core network device 103 is connected to the positioning device 104 through an interface. The positioning device 104 is configured to perform positioning calculation and management on a location of the terminal device 101.

For example, the terminal device 101 is connected to the access network device 102 through an NR-Uu interface. The access network device 102 is connected to the core network device 103 through an NG-C interface. The core network device 103 is connected to the positioning device 104 through an NL1 interface.

Optionally, the core network device 103 may be an access and mobility management function (access and mobility management function, AMF). The positioning device 104 may be a location management function (location management function, LMF).

FIG. 1 shows only an example in which the communication system includes the access network device 102. During actual application, the communication system may further include more access network devices. This is not specifically limited in this application.

The following describes a terminal device, an access network device, a core network device, and a positioning device in this application.

The terminal device is also referred to as user equipment (user equipment, UE), a mobile station (mobile station, MS), a mobile terminal (mobile terminal, MT), customer premises equipment (customer premises equipment, CPE), or the like. The terminal device is a device that includes a wireless communication function (providing a user with voice/data connectivity), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal (for example, an uncrewed aerial vehicle or a vehicle) in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the self-driving may be an uncrewed aerial vehicle, a helicopter, or an airplane. For example, the wireless terminal in vehicle to everything may be a vehicle-mounted device, vehicle equipment, a vehicle-mounted module, a vehicle, or a ship. The wireless terminal in the industrial control may be a camera, a robot, a robotic arm, or the like. The wireless terminal in the smart home may be a television, an air conditioner, a sweeper, a speaker, a set-top box, or the like.

It should be noted that the terminal device may be a device or an apparatus with a chip, a device or an apparatus integrated with a circuit, or a chip, a module, or a control unit in the device or apparatus shown above. This is not specifically limited in this application.

The access network device is a device deployed in a radio access network. The access network device provides a wireless communication function for the terminal device. For example, the access network device may be an access network (radio access network, RAN) node that helps the terminal device access a wireless network, and may also be referred to as a RAN entity, an access node, a network node, a network device, a communication apparatus, or the like.

Specifically, the access network device may be an access network device of a cellular system related to the 3rd generation partnership project (3rd generation partnership project, 3GPP), for example, a fourth-generation (fourth-generation, 4G) mobile communication system or a fifth-generation (fifth-generation, 5G) mobile communication system. Alternatively, the access network device may be an access network device in an open radio access network (open RAN, O-RAN, or ORAN) or a cloud radio access network (cloud radio access network, CRAN). Alternatively, the access network device may be an access network device in a communication system obtained by integrating the foregoing two or more communication systems.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), a transmission and reception point (transmission and reception point, TRP), or the like, or may be an access network device in a 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in a 5G mobile communication system. Alternatively, the access network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna unit (active antenna unit, AAU), or a remote radio head (remote radio head, RRH). Alternatively, the first network device may be a server, a wearable device, a vehicle, a vehicle-mounted device, or the like. For example, an access network device in a V2X technology may be a road side unit (road side unit, RSU).

It should be noted that in different systems, the CU (or the CU-CP and the CU-UP), the DU, or the RU may have different names, but persons skilled in the art may understand meanings of the names. For example, in the ORAN system, the CU may also be referred to as an O-CU or an open CU, the DU may also be referred to as an O-DU, the CU-CP may also be referred to as an O-CU-CP, the CU-UP may also be referred to as an O-CU-UP, and the RU may also be referred to as an O-RU. This is not specifically limited in this application. Any unit in the CU, the CU-CP, the CU-UP, the DU, and the RU in this application may be implemented by using a software module, a hardware module, or a combination of the software module and the hardware module.

Optionally, for the network elements in the ORAN system, each network element may implement a protocol layer function shown in Table 1.

**Table 1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), media access control (media access control, MAC), and physical higher layer (PHY-high) |
| O-RU | Physical lower layer (PHY-low) |

It should be noted that Table 1 is merely an example. During actual application, the protocol layer function supported by each network element is not limited. For example, each network element may support more protocol layer functions, or a protocol layer function supported by each network element is specifically configured based on an actual situation. This is not specifically limited in this application.

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has some functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer (for example, an RRC layer and/or an SDAP layer) above. The DU is configured to implement a function of a protocol layer below the PDCP layer (for example, an RLC layer, a MAC layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element configured to implement a control plane function in the core network. The network element configured to implement the control plane function in the core network may be an access and mobility function network element, for example, an access and mobility function (access and mobility management function, AMF) in the 5G mobile communication system. The access and mobility function network element is configured to be responsible for mobility management in a mobile network, for example, position update of a terminal device, network registration of the terminal device, and handover of the terminal device. The CU-UP may interact with a network element configured to implement a user plane function in the core network. The network element configured to implement the user plane function in the core network, for example, a user function (User Plane Function, UPF) in the 5G mobile communication system, is configured to be responsible for forwarding and receiving data in the terminal device.

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, functions of the CU or the DU may alternatively be obtained through division based on a service type or another system requirement. For example, division is performed based on a delay. In this case, functions whose processing time needs to satisfy a small delay requirement are disposed on the DU, and functions whose processing time does not need to satisfy the delay requirement are disposed on the CU.

The DU and the RU may work together to implement a function of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include a part of functions of the physical layer, and the part of functions is closer to the MAC layer. The lower-layer functions of the physical layer may include another part of functions of the physical layer, and the part of functions is closer to an intermediate radio frequency side.

It should be noted that the access network device may be the device or apparatus shown above, or may be a component (for example, a chip), a module, or a unit in the device or apparatus shown above. This is not specifically limited in this application.

The core network device is responsible for the access control, the registration management, the service management, the mobility management, and the like for the terminal device to access the network. For example, the core network device is the AMF.

The positioning device is configured to perform positioning calculation and management on a location of the terminal device. For example, the positioning device is the LMF.

In this application, a name of the AMF may change with evolution of a communication system. In a current communication system or a future communication system, a function network element that has another name and that has a function similar to that of the AMF may be understood as the AMF in this application, and is applicable to the method provided in embodiments of this application.

In this application, the LMF is a name in the current communication system. In the future communication system, the name of the LMF may change with evolution of the communication system. Therefore, the LMF is referred to as a positioning device below to describe the technical solutions in this application. The positioning device is configured to perform positioning calculation on the location of the terminal device. In the current communication system or the future communication system, a function network element that has another name and that has a function similar to that of the positioning device may be understood as the positioning device in this application, and is applicable to the method provided in this application.

The technical solutions in this application may be applied to various communication systems, such as a 5G mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after the 5G mobile communication system (for example, a 6G mobile communication system), and a vehicle to everything (vehicle to everything, V2X) communication system.

A communication system to which the technical solutions of this application are applicable includes a first device, a second device, and a positioning device. Optionally, the first device is a terminal device, and the second device is a network device. Alternatively, the first device is a network device, and the second device is a terminal device. This is not specifically limited in this application. The network device may be a core network device or an access network device. For example, the network device is an access network device deployed in a wireless network. For the core network device and the access network device, refer to the foregoing related descriptions. For the terminal device and the positioning device, refer to the foregoing related descriptions.

Currently, in a communication system, a terminal device is mainly positioned through cellular positioning. The following describes a possible cellular positioning method with reference to FIG. 2. As shown in FIG. 2, a terminal device 205 measures a positioning reference signal (positioning reference signal, PRS) 1 from a base station 201 at a moment 1, to obtain time of arrival of the PRS1 on an LOS 1 path. The terminal device 205 measures a PRS2 from a base station 202 at the moment 1, to obtain time of arrival of the PRS2 on an LOS 2 path. The terminal device 205 measures a PRS3 from a base station 203 at the moment 1, to obtain time of arrival of the PRS3 on an LOS 3 path. The terminal device 205 measures a PRS4 from a base station 204 at the moment 1, to obtain time of arrival of the PRS4 on an LOS 4 path. The terminal device 205 determines LOS distances between the terminal device 205 and the base station 201 to the base station 204 respectively based on the time of arrival of the PRS1 on the LOS1 path, the time of arrival of the PRS2 on the LOS2 path, the time of arrival of the PRS3 on the LOS3 path, and the time of arrival of the PRS4 on the LOS4 path. Then, the terminal device 205 determines a location of the terminal device 205 based on known locations of the base stations and the LOS distances between the terminal device 205 and the base station 201 to the base station 204. An LOS distance between a base station and the terminal device is a straight-line distance between the base station and the terminal device or a distance of an LOS path obtained by directly transmitting, to the terminal device, a positioning reference signal sent by the base station to the terminal device.

It can be learned that positioning on the terminal device depends on measurement of the LOS path between the terminal device and the base station. However, in an actual environment, due to existence of various obstacles, for example, a tree, a building, or a wall, an LOS distance between each of a plurality of base stations and the terminal device usually cannot be obtained through measurement, but a non line of sight (non line of sight, NLOS) distance between each of the plurality of base stations and the terminal device is obtained through measurement. An NLOS distance between the base station and the terminal device is a distance of an NLOS path obtained by reflecting, via a reflector, the positioning reference signal sent by the base station to the terminal device. The terminal device measures the positioning reference signal to obtain a measurement result of the NLOS path, and the terminal device measures the positioning reference signal to obtain a measurement result of the LOS path. There is a large deviation between the measurement result of the NLOS path and the measurement result of the LOS path. Therefore, in an NLOS scenario, how to implement high-accuracy positioning on a terminal device is an urgent problem to be resolved.

This application provides corresponding technical solutions, so that a first device sends a first measurement result and information about a first propagation path to a positioning device. This helps improve accuracy of positioning the first device or a second device by the positioning device. The technical solutions of this application are applicable to an LOS scenario and/or an NLOS scenario. This is not specifically limited in this application.

In this application, an example in which one measurement result corresponds to one propagation path is mainly used to describe the technical solutions of this application. During actual application, one measurement result may correspond to a plurality of propagation paths. This is not specifically limited in this application.

In this application, the positioning reference signal may be any one of a sounding reference signal (sounding reference signal, SRS), a positioning reference signal (positioning reference signal, PRS), a channel state information reference signal (channel state information reference signal, CSI-RS), a phase-tracking reference signal (phase-tracking reference signal, PT-RS), a demodulation reference signal (demodulation reference signal, DMRS), or a tracking reference signal (tracking reference signal, TRS), or may be another reference signal. This is not specifically limited in this application.

In this application, the measurement result may be a relative time of arrival (relative time of arrival, RTOA), a reference signal time difference (reference signal time difference, RSTD), a time of arrival (time of arrival, TOA), an angle of arrival (angle of arrival, AoA), a reference signal received power (reference signal received power, RSRP), a reference signal received path power (reference signal received path power, RSRPP), a delay (RSTD-ResultDiff) of an additional path relative to an initial path, a phase (phase), or a carrier phase (carrier phase) obtained by the first device by measuring the positioning reference signal, a measurement result obtained through further calculation (for example, an operation like addition or subtraction) based on the measurement quantities shown above, or the like. This is not limited in this application.

In this application, positioning may alternatively be translated as any one of location, position, localization, and the like. In other words, the four translations may be replaced with each other, and a singular form and a plural form are not limited.

In this application, the two descriptions of positioning and location may be replaced with each other. For example, a positioning information request may be replaced with a location information request, and the two descriptions may both indicate a same or similar meaning. A positioning center, a location center, a positioning server, and a location server may be replaced with each other, and the four descriptions may all indicate a same or similar meaning. This is not specifically limited in this application.

In this application, a sequence of words in a word group or a phrase may be changed, without affecting a meaning. For a word group or a phrase, descriptions in different word sequences may be replaced with each other, and the descriptions in the different word sequences indicate a same meaning. For example, a "measurement information request" and "request measurement information" have a same meaning. Further, a sequence of English words in an English translation corresponding to the word group or the phrase may be adjusted, without affecting the meaning, for example, a location information request (location information request) and request location information (request location information). Sequence of words in a phrase, a short sentence, and a word group are not limited in this application.

In this application, a positioning device, a positioning center, a positioning server, a location center, a location management function, and the like all represent a same meaning, and represent a node, a function, a service, a device, or the like that has a location or positioning-related function.

The technical solutions of this application are described below with reference to specific embodiments.

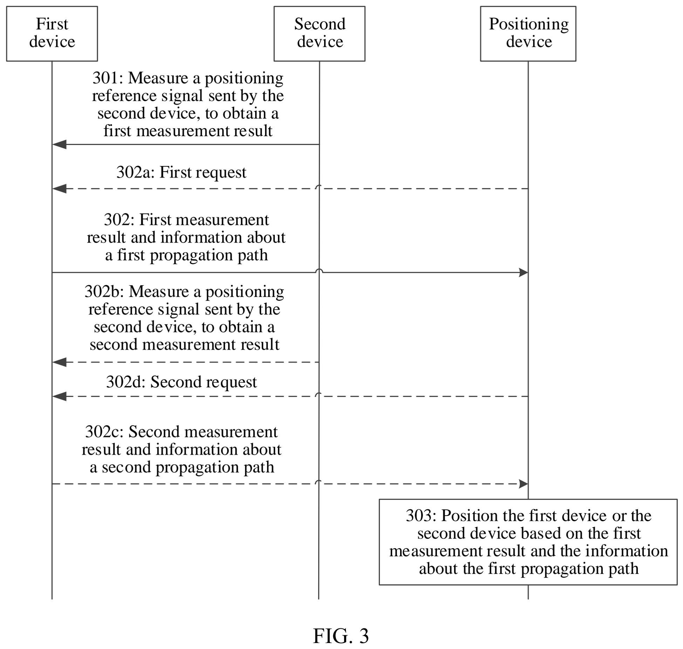

FIG. 3 is a diagram of an embodiment of a signal measurement and reporting method and a positioning method according to an embodiment of this application. Refer to FIG. 3. The methods include the following steps.

301: A first device measures a positioning reference signal sent by a second device, to obtain a first measurement result.

Specifically, the second device sends the positioning reference signal to the first device. Correspondingly, the first device receives the positioning reference signal from the second device, and measures the positioning reference signal to obtain the first measurement result.

Optionally, the first measurement result is obtained by the first device by measuring, at a first moment, the positioning reference signal sent by the second device. Alternatively, the first measurement result is obtained by the first device by measuring, for a first time, the positioning reference signal sent by the second device. Alternatively, the first measurement result is obtained by the first device by measuring a first positioning reference signal sent by the second device.

Optionally, the first device is a terminal device, and the second device is a network device. Alternatively, the first device is a network device, and the second device is a terminal device.

The first measurement result corresponds to a first propagation path, and the first propagation path is a propagation path between the first device and the second device. In other words, the first measurement result is a measurement result that is of the first propagation path and that is obtained by the first device by measuring the positioning reference signal sent by the second device. The first propagation path may be any propagation path between the first device and the second device. For example, the first propagation path is an initial path or an additional path; or the first propagation path is an LOS path or an NLOS path; or the first propagation path is a first path, a second path, a third path, or the like. This is not specifically limited in this application.

Step 301 merely shows an implementation in which the first device measures the positioning reference signal sent by the second device to obtain the first measurement result. Optionally, the first device may further obtain more measurement results by measuring the positioning reference signal sent by the second device. Each measurement result corresponds to one propagation path, and different measurement results correspond to different propagation paths. This is not specifically limited in this application. For example, the first device further obtains a third measurement result by measuring the positioning reference signal sent by the second device. The third measurement result corresponds to a third propagation path. In other words, the third measurement result is a measurement result that is of the third propagation path and that is obtained by the first device by measuring the positioning reference signal sent by the second device.

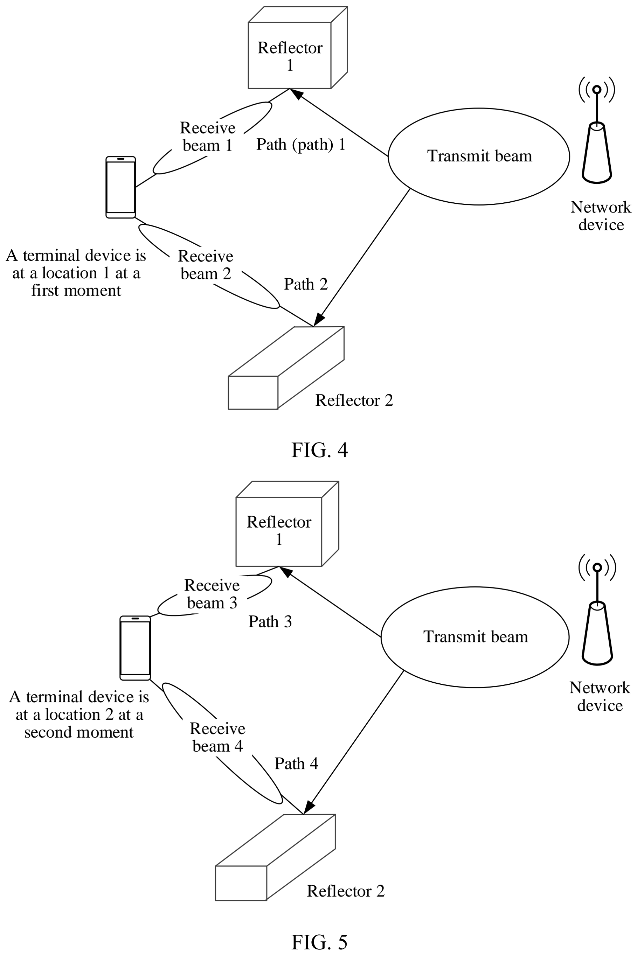

For example, as shown in FIG. 4, the first device is a terminal device, and the second device is a network device. The terminal device is at a location 1 at the first moment. The terminal device measures, at the first moment, the positioning reference signal sent by the network device, to obtain the first measurement result and the third measurement result. The first measurement result corresponds to the first propagation path (namely, a path 1). The first measurement result is a measurement result that is of the path 1 and that is obtained by the terminal device by measuring the positioning reference signal at the first moment. The third measurement result corresponds to the third propagation path (namely, a path 2). The third measurement result is a measurement result that is of the path 2 and that is obtained by the terminal device by measuring the positioning reference signal at the first moment.

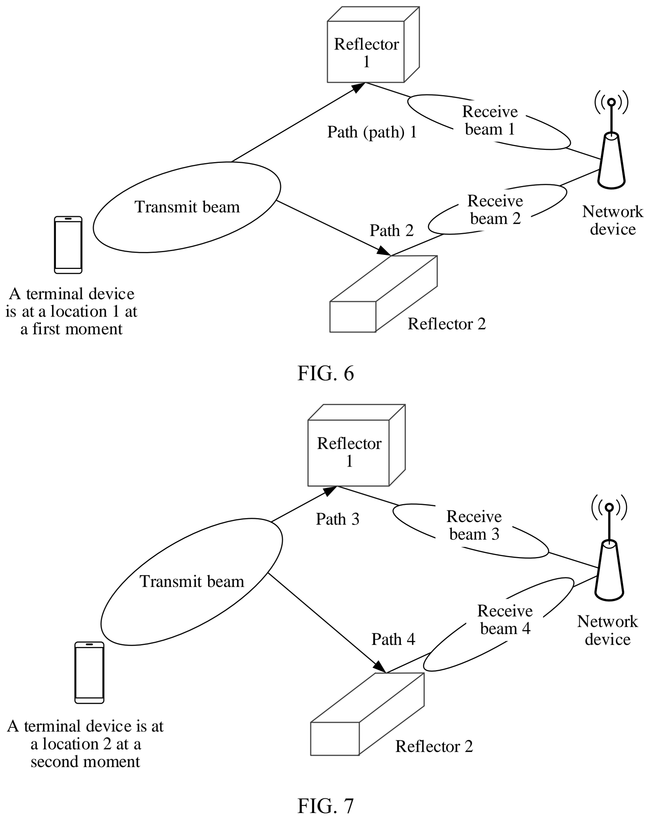

For example, as shown in FIG. 6, the first device is a network device, and the second device is a terminal device. The terminal device is at a location 1 at the first moment. The network device measures, at the first moment, the positioning reference signal sent by the terminal device, to obtain the first measurement result and the third measurement result. The first measurement result corresponds to the first propagation path (namely, a path 1). The first measurement result is a measurement result that is of the path 1 and that is obtained by the network device by measuring the positioning reference signal at the first moment. The third measurement result corresponds to the third propagation path (namely, a path 2). The third measurement result is a measurement result that is of the path 2 and that is obtained by the network device by measuring the positioning reference signal at the first moment.

Optionally, the first measurement result includes a measurement quantity that is of the first propagation path and that is obtained by the first device by measuring the positioning reference signal at the first moment. For example, the measurement quantity includes at least one of the following: a time difference of arrival (time difference of arrival, TDOA), a RTOA, or an AOA. Optionally, the third measurement result includes a measurement quantity that is of the third propagation path and that is obtained by the first device by measuring the positioning reference signal at the first moment. For the measurement quantity, refer to the foregoing descriptions.

302: The first device sends the first measurement result and information about the first propagation path to a positioning device.

Optionally, the information about the first propagation path includes at least one of the following items.

### 1. Label of the first propagation path

The label of the first propagation path is used to identify the first propagation path. For example, as shown in FIG. 4, the terminal device measures, at the first moment, the positioning reference signal sent by the network device, to obtain the first measurement result. The first measurement result corresponds to the path 1. A label of the path 1 is a label 1. Optionally, the label of the first propagation path may also be referred to as an identifier (identifier, ID) of the first propagation path.

### 2. Random value of the first propagation path

Specifically, each propagation path corresponds to one random value. Optionally, the random value of each propagation path is determined based on a label of each propagation path and a preset algorithm. The random value of the first propagation path may also be referred to as a random value associated with the first propagation path. For example, as shown in FIG. 4, the terminal device measures, at the first moment, the positioning reference signal sent by the network device, to obtain the first measurement result. The first measurement result corresponds to the path 1. The path 1 corresponds to a random value 1. It can be learned that the random value may be used to identify the first propagation path.

### 3. Name of the first propagation path

For example, as shown in FIG. 4, the terminal device measures, at the first moment, the positioning reference signal sent by the network device, to obtain the first measurement result. The first measurement result corresponds to the path 1. A name of the path 1 may be a first path, a second path, or an N^{th} path, and optionally, may alternatively be a strongest path, a farthest path, or the like. Optionally, there may be another name, and the name is not limited herein.

### 4. Information about a reflector associated with the first propagation path

Optionally, the information about the reflector associated with the first propagation path includes a label or an identifier of the reflector associated with the first propagation path, or the information about the reflector associated with the first propagation path includes indication information of the reflector. The information about the reflector indicates the reflector. The reflector may be a wall, the ground, a floor, a metal reflector, a metal reflective surface, or an intelligent reflective surface (reflective intelligent surface, RIS; or intelligent reflective surface, IRS).

Optionally, the information about the reflector associated with the first propagation path may further include indication information indicating whether the first propagation path is associated with a reflector. For example, if the indication information is "yes", it indicates that the first propagation path is associated with the reflector, for example, the wall, the ground, or the intelligent reflective surface. If the indication information is "no", it indicates that the first propagation path is not associated with the reflector, for example, the wall, the ground, or the intelligent reflective surface.

For example, as shown in FIG. 4, the terminal device measures, at the first moment, the positioning reference signal sent by the network device, to obtain the first measurement result. The first measurement result corresponds to the first propagation path (namely, the path 1). The path 1 is associated with a reflector 1. In other words, the path 1 is obtained by passing by the reflector 1 by the positioning reference signal sent by the network device at the first moment. The information about the reflector associated with the first propagation path includes information about the reflector 1.

### 5. Information about a reflective surface associated with the first propagation path

Optionally, the information about the reflective surface associated with the first propagation path includes a label or a label of the reflective surface associated with the first propagation path, or the information about the reflective surface associated with the first propagation path includes indication information of the reflective surface associated with the first propagation path. The indication information indicates the reflective surface.

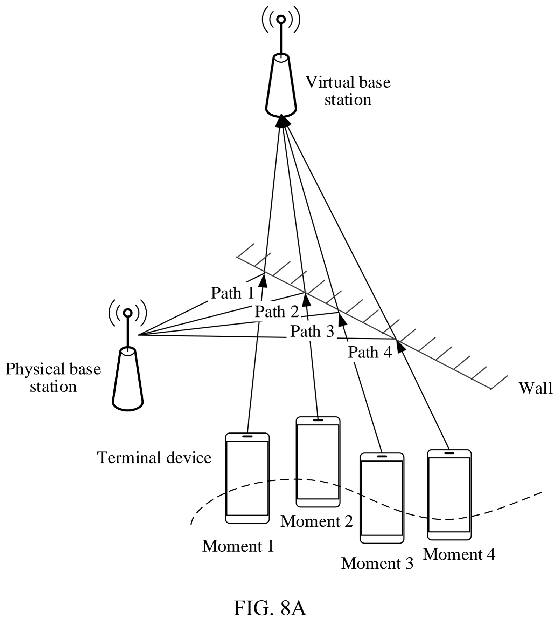

For example, as shown in FIG. 8A, a physical base station measures, at a moment 1, the positioning reference signal sent by the terminal device, to obtain the first measurement result. The first measurement result corresponds to the first propagation path (namely, the path 1). The path 1 is associated with a wall surface, and the wall surface is the reflective surface associated with the first propagation path. In other words, the path 1 is obtained by passing by the wall surface by the positioning reference signal sent by the terminal device at the moment 1. The information about the reflective surface associated with the first propagation path includes information about the wall surface.

Optionally, the path 1 may also be associated with another reflective surface, for example, the ground, a reflective surface 1, or a reflective surface 2. The reflective surface 1 and the reflective surface 2 may represent reflective surfaces corresponding to other reflectors, and the other reflectors include, for example, a dedicated metal reflective plate and an intelligent reflective surface.

Optionally, the information about the reflective surface associated with the first propagation path may further include indication information indicating whether the first propagation path is associated with a reflective surface. For example, if the indication information is "yes", it indicates that the first propagation path is associated with the reflective surface, for example, the wall surface, the ground, or the intelligent reflective surface. If the indication information is "no", it indicates that the first propagation path is not associated with the reflective surface, for example, the wall surface, the ground, or the intelligent reflective surface.

### 6. RPTI of the first propagation path

The RPTI of the first propagation path is used to identify the first propagation path. Different propagation paths may correspond to different RPTIs.

### 7. Priority of the first propagation path

Optionally, different propagation paths correspond to different priorities. For example, as shown in FIG. 4, the first device is a terminal device, and the terminal device measures the positioning reference signal at the first moment to obtain the path 1 and the path 2. The first propagation path is the path 1. Signal strength of the path 1 measured by the terminal device is stronger, and signal strength of the path 2 measured by the terminal device is weaker. Therefore, the priority of the first propagation path may be higher. In this way, this helps the positioning device position the first device or the second device by using a measurement result corresponding to a propagation path with a higher priority. This helps improve positioning accuracy.

### 8. Information about at least one receive beam associated with the first propagation path

The at least one receive beam associated with the first propagation path is at least one receive beam used by the first device to measure the positioning reference signal at the first moment to obtain the first measurement result. In other words, the at least one receive beam is a path-level receive beam, and is associated with the first propagation path. A conventional receive beam or transmit beam is to cause an entire channel (including a plurality of paths) to have strongest receive energy or transmit energy. The path-level receive beam means that an entire receive beam or receive beamforming (beamforming) is associated with one path, so that energy of the path is the strongest, energy of another propagation path is the weakest, or the like. For example, as shown in FIG. 4, the first device is a terminal device, and the second device is a network device. The terminal device measures, at the first moment by using a receive beam 1, the positioning reference signal sent by the network device, to obtain the measurement result of the first propagation path (namely, the path 1). Therefore, it can be learned that the first propagation path (namely, the path 1) is associated with the receive beam 1. The information about the at least one receive beam associated with the first propagation path includes information about the receive beam 1.

Optionally, the information about the at least one receive beam associated with the first propagation path includes at least one of the following: a beam identifier, an angle value, or an angle range of the at least one receive beam associated with the first propagation path. For example, as shown in FIG. 4, the first propagation path (namely, the path 1) is associated with the receive beam 1, and a beam identifier of the receive beam 1 may be a beam identifier 1.

Optionally, the first device sends the third measurement result and information about the third propagation path to the positioning device. The third measurement result is the measurement result that is of the third propagation path and that is obtained by the first device by measuring the positioning reference signal sent by the second device. Optionally, the third measurement result is obtained by the first device by measuring, at a third moment, the positioning reference signal sent by the second device. The third moment and the first moment may be a same moment, or may be different moments. Alternatively, the third measurement result is obtained by the first device by measuring, for a third time, the positioning reference signal sent by the second device. Alternatively, the third measurement result is obtained by the first device by measuring a third positioning reference signal sent by the second device. The first positioning reference signal and the third positioning reference signal may be a same positioning reference signal, or may be different positioning reference signals. The third measurement result and the information about the third propagation path are similar to the first measurement result and the information about the first propagation path. For details, refer to the foregoing related descriptions. The third propagation path is a propagation path between the first device and the second device, and is another propagation path different from the first propagation path. For example, the third propagation path may be an initial path or an additional path, or the third propagation path is a first path, a second path, or a third path. For example, as shown in FIG. 4, the first device is a terminal device, and the second device is a network device. The terminal device is at the location 1 at the first moment. The terminal device measures, at the first moment, the positioning reference signal sent by the network device, to obtain the third measurement result. The third measurement result corresponds to the third propagation path (namely, the path 2). The third measurement result is the measurement result that is of the path 2 and that is obtained by the terminal device by measuring the positioning reference signal at the first moment. The terminal device sends the third measurement result and the information about the third propagation path to the positioning device.

Optionally, the information about the third propagation path includes at least one of the following items.
1. Label of the third propagation path: For the label of the third propagation path, refer to the related descriptions of the label of the first propagation path.
   For example, as shown in FIG. 4, the terminal device measures, at the first moment, the positioning reference signal sent by the network device, to obtain the third measurement result. The third measurement result corresponds to the path 2. In the foregoing example, the first propagation path is the path 1, and the label of the path 1 is the label 1. Therefore, a label of the path 2 may be a label 2. In this way, a specific propagation path is identified based on a label.
2. Random value of the third propagation path: For the random value of the third propagation path, refer to the related descriptions of the random value of the third propagation path.
   For example, in the foregoing related example in which the first propagation path is the path 1, the path 1 corresponds to the random value 1. As shown in FIG. 4, the third propagation path is the path 2, and the path 2 corresponds to a random value 2. In this way, a specific propagation path is identified based on a random value.
3. Name of the third propagation path
   For example, as shown in FIG. 4, the terminal device measures, at the first moment, the positioning reference signal sent by the network device, to obtain the third measurement result. The third measurement result corresponds to the path 2. It can be learned from the foregoing related descriptions of the path 1 that the name of the path 1 may be the first path, the strongest path, or the farthest path. A name of the path 2 may be a second path, a weakest path, or a nearest path. This is not specifically limited in this application. In this way, a specific propagation path is identified based on a name of the propagation path.
4. Information about a reflector associated with the third propagation path

Optionally, the information about the reflector associated with the third propagation path includes a label or an identifier of the reflector associated with the third propagation path.

For example, as shown in FIG. 4, the terminal device measures, at the first moment, the positioning reference signal sent by the network device, to obtain the third measurement result. The third measurement result corresponds to the third propagation path (namely, the path 2). The path 2 is associated with a reflector 2. In other words, the path 2 is obtained by passing by the reflector 2 by the positioning reference signal sent by the network device at the first moment. The information about the reflector associated with the third propagation path includes information about the reflector 2.

### 5. Information about a reflective surface associated with the third propagation path

### 6. RPTI of the third propagation path

### 7. Priority of the third propagation path

Information about a reflective surface associated with the third propagation path and the RPTI and the priority of the third propagation path are similar to the RPTI and the priority of the first propagation path. For details, refer to the foregoing related descriptions. Details are not described herein again.

### 8. Information about at least one receive beam associated with the third propagation path

The at least one receive beam associated with the third propagation path is at least one receive beam used by the first device to measure the positioning reference signal at the first moment to obtain the third measurement result. In other words, the at least one receive beam is a path-level receive beam, and is associated with the third propagation path. For example, as shown in FIG. 4, the first device is a terminal device, and the second device is a network device. The terminal device measures, at the first moment by using a receive beam 2, the positioning reference signal sent by the network device, to obtain the measurement result of the third propagation path (the path 2). Therefore, it can be learned that the measurement result of the third propagation path (the path 2) is associated with the receive beam 2. The information about the at least one receive beam associated with the third propagation path includes information about the receive beam 2. The information about the at least one receive beam associated with the third propagation path is similar to the information about the at least one receive beam associated with the first propagation path. For details, refer to the foregoing related descriptions. For example, as shown in FIG. 4, the third propagation path (namely, the path 2) is associated with the receive beam 2, and a beam identifier of the receive beam 2 may be a beam identifier 2. In this way, a specific receive beam may be identified based on a beam identifier, so that a specific propagation path is identified based on the beam identifier.

Optionally, the embodiment shown in FIG. 3 further includes step 302a. Step 302a may be performed before step 302, or step 302a may be performed after step 302, or step 302a and step 302 may be performed simultaneously.

302a: The positioning device sends a first request to the first device. Correspondingly, the first device receives the first request from the positioning device.

The first request is used to request the first device to report a measurement result.

In a possible implementation, the first request is a location information request (location information request). In this implementation, the first device is a terminal device.

In another possible implementation, the first request is a measurement request (measurement request) or a measurement information request (measurement information request). In this implementation, the first device is a network device.

It should be noted that there is no fixed execution sequence between step 302a and step 301. Step 302a may be performed before step 301, or step 301 is performed before step 301a, or step 301 and step 302a are simultaneously performed based on a case. This is not specifically limited in this application.

303: The positioning device positions the first device or the second device based on the first measurement result and the information about the first propagation path.

In a possible implementation, the first device is a terminal device, and the second device is a network device. The positioning device positions the first device based on the first measurement result and the information about the first propagation path.

In another possible implementation, the first device is a network device, and the second device is a terminal device. The positioning device positions the second device based on the first measurement result and the information about the first propagation path.

Optionally, the positioning device further receives the third measurement result and the information about the third propagation path from the first device. In this case, step 303 specifically includes: The positioning device positions the first device or the second device based on the first measurement result, the third measurement result, the information about the first propagation path, and the information about the third propagation path.

Optionally, the embodiment shown in FIG. 3 further includes step 302b and step 302c. Step 302b and step 302c may be performed before step 303.

302b: The first device measures a positioning reference signal from the second device, to obtain a second measurement result.

Step 302b is similar to step 301. For details, refer to the related descriptions of step 301. Details are not described herein again.

Optionally, the second measurement result is obtained by the first device by measuring, at a second moment, the positioning reference signal sent by the second device. Alternatively, the second measurement result is obtained by the first device by measuring, for a second time, the positioning reference signal sent by the second device. Alternatively, the second measurement result is obtained by the first device by measuring a second positioning reference signal.

It should be understood that the first moment in step 301 and the second moment may be a same moment. In other words, the first measurement result and the second measurement result are obtained by the first device by measuring a same positioning reference signal sent by the second device. Alternatively, the first moment in step 301 and the second moment may be two different moments. The first positioning reference signal in step 301 and the second positioning reference signal may be a same positioning reference signal, or may be different positioning reference signals. This is not specifically limited in this application.

Optionally, the first measurement result and the second measurement result are respectively obtained by the first device by measuring two positioning reference signals sent by the second device on a same positioning reference signal resource; or the first measurement result and the second measurement result are respectively obtained by the first device by measuring positioning reference signals sent by the second device on two different positioning reference signal resources.

It should be noted that, optionally, in this application, measurement time corresponding to the first measurement result and measurement time corresponding to the second measurement result may be the same or different. The measurement time corresponding to the first measurement result is measurement time at which the first device measures the positioning reference signal sent by the second device. The measurement time corresponding to the second measurement result is measurement time at which the first device measures the positioning reference signal sent by the second device.

It should be noted that, optionally, in this application, sending time of the positioning reference signal corresponding to the first measurement result and sending time of the positioning reference signal corresponding to the second measurement result may be the same or different. The sending time of the positioning reference signal corresponding to the first measurement result is sending time of the positioning reference signal measured by the first device to obtain the first measurement result. The sending time of the positioning reference signal corresponding to the second measurement result is sending time of the positioning reference signal measured by the first device to obtain the second measurement result. The positioning reference signal resource corresponding to the first measurement result and the positioning reference signal resource corresponding to the second measurement result may be the same or different. The positioning reference signal resource corresponding to the first measurement result is a resource that carries the positioning reference signal corresponding to the first measurement result. The positioning reference signal resource corresponding to the second measurement result is a resource that carries the positioning reference signal corresponding to the second measurement result.

The second measurement result corresponds to a second propagation path, and the second propagation path is a propagation path between the first device and the second device. In other words, the second measurement result is a measurement result that is of the second propagation path and that is obtained by the first device by measuring the positioning reference signal sent by the second device. The second propagation path is any propagation path between the first device and the second device. For example, the second propagation path is an initial path or an additional path; or the second propagation path is an LOS path or an NLOS path; or the second propagation path is a first path, a second path, a third path, or the like. This is not specifically limited in this application.

Step 302b merely shows an implementation in which the first device measures the positioning reference signal sent by the second device to obtain the second measurement result. Optionally, the first device may further obtain more measurement results by measuring the positioning reference signal sent by the second device. Each measurement result in the more measurement results corresponds to one propagation path, and different measurement results correspond to different propagation paths. This is not specifically limited in this application. For example, the first device further obtains a fourth measurement result by measuring the positioning reference signal sent by the second device. The fourth measurement result corresponds to a fourth propagation path. In other words, the fourth measurement result is a measurement result that is of the fourth propagation path and that is obtained by the first device by measuring the positioning reference signal sent by the second device.

For example, as shown in FIG. 5, the first device is a terminal device, and the second device is a network device. The terminal device is at a location 2 at the second moment. The terminal device measures, at the second moment, the positioning reference signal sent by the network device, to obtain the second measurement result and the fourth measurement result. The second measurement result corresponds to the second propagation path (namely, a path 3). The second measurement result is a measurement result that is of the path 3 and that is obtained by the terminal device by measuring the positioning reference signal at the second moment. The fourth measurement result corresponds to the fourth propagation path (namely, a path 4). The fourth measurement result is a measurement result that is of the path 4 and that is obtained by the terminal device by measuring the positioning reference signal at the second moment.

For example, as shown in FIG. 7, the first device is a network device, and the second device is a terminal device. The terminal device is at a location 2 at the second moment. The network device measures, at the second moment, the positioning reference signal sent by the terminal device, to obtain the second measurement result and the fourth measurement result. The second measurement result corresponds to the second propagation path (namely, a path 3). The second measurement result is a measurement result that is of the path 3 and that is obtained by the network device by measuring the positioning reference signal at the second moment. The fourth measurement result corresponds to the fourth propagation path (namely, a path 4). The fourth measurement result is a measurement result that is of the path 4 and that is obtained by the network device by measuring the positioning reference signal at the second moment.

Optionally, the second measurement result includes a measurement quantity that is of the second propagation path and that is obtained by the first device by measuring the positioning reference signal at the second moment. For the measurement quantity, refer to the related descriptions in step 301. Details are not described herein again.

Optionally, the first moment and the second moment are two moments at which the first device continuously measures the positioning reference signal sent by the second device; or the first moment and the second moment are two moments at which the first device discontinuously measures the positioning reference signal sent by the second device. This is not specifically limited in this application. For example, as shown in FIG. 8A, the physical base station measures, at the moment 1, the positioning reference signal sent by the terminal device, and measures, at the moment 2, the positioning reference signal sent by the terminal device. The moment 1 and the moment 2 are two moments at which the physical base station continuously measures the positioning reference signal sent by the terminal device.

302c: The first device sends the second measurement result and information about the second propagation path to the positioning device. Correspondingly, the positioning device receives the second measurement result and the information about the second propagation path from the first device.

Optionally, the information about the second propagation path includes at least one of the following items.
1. Label of the second propagation path: For the label of the second propagation path, refer to the related descriptions of the label of the first propagation path. Details are not described herein again.

Optionally, the label of the first propagation path may be the same as the label of the second propagation path, or the label of the first propagation path and the label of the second propagation path belong to a same category. In this implementation, the first propagation path and the second propagation path are two propagation paths obtained by reflecting, via a same reflector, positioning reference signals sent by the second device at the first moment and the second moment.

For example, as shown in FIG. 4, the terminal device 4 measures, at the first moment, the positioning reference signal sent by the network device, to obtain the first measurement result, namely, the measurement result of the path 1. As shown in FIG. 5, the terminal device measures, at the second moment, the positioning reference signal sent by the network device, to obtain the second measurement result, namely, the measurement result of the path 3. It can be learned from FIG. 4 and FIG. 5 that the path 1 and the path 3 are two paths obtained by reflecting, via the reflector 1, positioning reference signals sent by the terminal device at two different moments. Therefore, it can be learned from step 302 that the label of the path 1 may be the label 1, and a label of the path 3 may also be the label 1. Alternatively, a value of the label of the path 1 and a value of the label of the path 3 belong to a same category. For example, the category indicates that the path 1 and the path 3 are two paths obtained by reflecting, via the reflector 1, positioning reference signals sent by the terminal device at two different moments.

2. Random value of the second propagation path: For the random value of the second propagation path, refer to the related descriptions of the random value of the second propagation path. Details are not described herein again.

Optionally, the random value of the first propagation path may be the same as the random value of the second propagation path. In this implementation, the first propagation path and the second propagation path are two propagation paths obtained by reflecting, via a same reflector, positioning reference signals sent by the second device at the first moment and the second moment. For example, it can be learned from FIG. 4 and FIG. 5 that the path 1 and the path 3 are two paths obtained by reflecting, via the reflector 1, positioning reference signals sent by the terminal device at two different moments. Therefore, it can be learned from step 302 that the path 1 may correspond to the random value 1, and the path 3 may also correspond to the random value 1.

3. Name of the second propagation path: For the name of the second propagation path, refer to the related descriptions of the name of the first propagation path. Details are not described herein again.

Optionally, the name of the first propagation path is the same as the name of the second propagation path. In this implementation, the first propagation path and the second propagation path are two propagation paths obtained by reflecting, via a same reflector, positioning reference signals sent by the second device at the first moment and the second moment. For example, it can be learned from FIG. 4 and FIG. 5 that the path 1 and the path 3 are two paths obtained by reflecting, via the reflector 1, the positioning reference signals that are respectively sent by the terminal device at the first moment and the second moment. Therefore, the name of the path 1 may be the same as the name of the path 3. For example, both the name of the path 1 and the name of the path 3 are the first path, the strongest path, or the farthest path.

4. Information about a reflector associated with the second propagation path: For the information about the reflector associated with the second propagation path, refer to the related descriptions of the information about the reflector associated with the first propagation path. Details are not described herein again. For example, the reflector may be a building (for example, a tower), a tree, or the like. The reflector may alternatively be a scatterer. This is not specifically limited in this application.

Optionally, the information about the reflector associated with the first propagation path is the same as the information about the reflector associated with the second propagation path. In this implementation, the first propagation path and the second propagation path are two propagation paths obtained by reflecting, via a same reflector, positioning reference signals sent by the second device at the first moment and the second moment. For example, it can be learned from FIG. 4 and FIG. 5 that the path 1 and the path 3 are two paths obtained by reflecting, via the reflector 1, the positioning reference signals that are respectively sent by the terminal device at the first moment and the second moment. Therefore, it can be learned that both the path 1 and the path 3 are associated with the reflector 1.

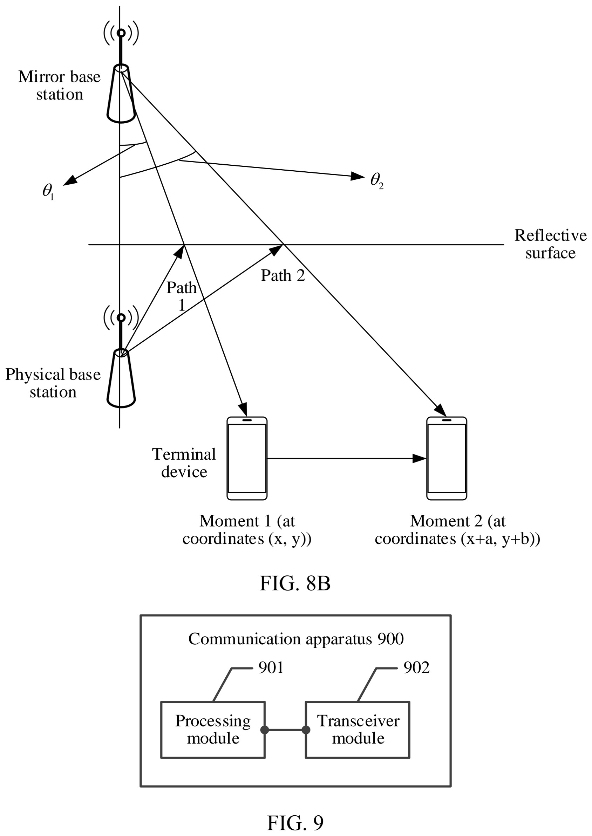

If the first propagation path and the second propagation path are associated with the same reflector, the positioning device may determine the first measurement result and the second measurement result based on positioning reference signals transmitted by a specific virtual base station. The virtual base station is a mirror virtual base station of a physical base station (namely, a real base station) relative to a reflective surface or a reflector. An NLOS path between the physical base station and the terminal device may be considered as an LOS path between the virtual base station and the terminal device. For example, as shown in FIG. 8B, the first propagation path is the path 1, and the second propagation path 2 is the path 2. The path 1 and the path 2 are associated with a same wall surface. As shown in FIG. 8B, the path 1 may be considered as an LOS path (or a straight-line distance) between the virtual base station and a terminal device that is at coordinates (x, y). The path 2 may be considered as an LOS path (or a straight-line distance) between the virtual base station and a terminal device that is at coordinates (x+a, y+b).

5. Information about a reflective surface associated with the second propagation path: For the information about the reflective surface associated with the second propagation path, refer to the related descriptions of the information about the reflective surface associated with the first propagation path. Details are not described herein again. For example, the reflective surface may be a wall surface, an artificial reflective plate, or the like. For example, the reflective surface may be a reflective intelligent surface (reflective intelligent surface, RIS) or an intelligent reflective surface (intelligent reflective surface, IRS).

Optionally, the information about the reflective surface associated with the first propagation path is the same as the information about the reflective surface associated with the second propagation path. In this implementation, the first propagation path and the second propagation path are two propagation paths obtained by reflecting, via a same reflective surface, positioning reference signals sent by the second device at the first moment and the second moment. For example, as shown in FIG. 8A, the path 1 and the path 2 are two paths obtained by reflecting, via a wall surface (namely, a same reflective surface), positioning reference signals that are respectively sent by the terminal device at the moment 1 and the moment. Therefore, it can be learned that both the path 1 and the path 2 are associated with the wall surface.

6. RPTI of the second propagation path: For the RPTI of the second propagation path, refer to the related descriptions of the RPTI of the first propagation path. Details are not described herein again.

Optionally, the RPTI of the first propagation path is the same as the RPTI of the second propagation path. In this implementation, the first propagation path and the second propagation path are two propagation paths obtained by reflecting, via a same reflector, positioning reference signals sent by the second device at the first moment and the second moment. For example, as shown in FIG. 4 and FIG. 5, the path 1 and the path 3 are two paths obtained by reflecting, via the reflector 1, the positioning reference signals that are respectively sent by the terminal device at the first moment and the second moment. Therefore, the path 1 and the path 3 may use a same RPTI identifier.

7. Priority of the second propagation path: For the priority of the second propagation path, refer to the related descriptions of the priority of the first propagation path. Details are not described herein again.

### 8. Information about at least one receive beam associated with the second propagation path

For the information about the at least one receive beam associated with the second propagation path, refer to the related descriptions of the information about the at least one receive beam associated with the first propagation path. Details are not described herein again.

It should be noted that step 302 and step 302c may be performed simultaneously or separately. This is not specifically limited in this application.

Optionally, the first device sends the fourth measurement result and information about the fourth propagation path to the positioning device. The fourth measurement result corresponds to the fourth propagation path. The fourth measurement result is the measurement result that is of the fourth propagation path and that is obtained by the first device by measuring the positioning reference signal sent by the second device. Optionally, the fourth measurement result is obtained by the first device by measuring, at a fourth moment, the positioning reference signal sent by the second device. The fourth moment and the second moment may be a same moment, or may be different moments. Alternatively, the fourth measurement result is obtained by the first device by measuring, for a fourth time, the positioning reference signal sent by the second device. Alternatively, the fourth measurement result is obtained by the first device by measuring a fourth positioning reference signal sent by the second device. The second positioning reference signal and the fourth positioning reference signal may be a same positioning reference signal, or may be different positioning reference signals. For a case in which the first device sends the fourth measurement result and the information about the fourth propagation path to the positioning device, refer to the foregoing related descriptions of a case in which the first device sends the third measurement result and the information about the third propagation path to the positioning device.

The following describes some possible representation forms of the first measurement result, the information about the first propagation path, the second measurement result, and the information about the second propagation path.

As shown in FIG. 4, the first device is a terminal device, and the second device is a network device. The terminal device measures the positioning reference signal from the network device by using the receive beam 1, to obtain the first measurement result, namely, a TDOA of the path 1. The first propagation path is the path 1, and the path 1 is associated with the receive beam 1. As shown in Table 2, the terminal device sends the TDOA of the path 1 and the beam identifier 1 of the receive beam 1 associated with the path 1 to the positioning device. Optionally, the terminal device measures the positioning reference signal from the network device by using the receive beam 2, to obtain the third measurement result, namely, a TDOA of the path 2. The third propagation path is the path 2, and the path 2 is associated with the receive beam 2. As shown in Table 2, the terminal device sends the TDOA of the path 2 and the beam identifier 2 of the receive beam 2 associated with the path 2 to the positioning device. It can be learned that the positioning device may determine each measurement result that is obtained by measuring the positioning reference signal and that is reported by the first device and information about a receive beam corresponding to each measurement result.

As shown in FIG. 5, the terminal device measures the positioning reference signal from the network device by using the receive beam 3, to obtain the second measurement result, namely, a TDOA of the path 3. The second propagation path is the path 3, and the path 3 is associated with the receive beam 3. Because the path 1 and the path 3 are two paths obtained by reflecting, via the reflector 1, the positioning reference signal sent by the network device, the beam identifier 1 may be used as a beam identifier of the receive beam 3. In other words, the receive beam 3 and the receive beam 1 use the same beam identifier. Therefore, as shown in Table 3, the terminal device sends the TDOA of the path 3 and the beam identifier 1 of the receive beam 3 associated with the path 3 to the positioning device. Optionally, the terminal device measures the positioning reference signal from the network device by using the receive beam 4, to obtain the fourth measurement result, namely, a TDOA of the path 4. The fourth propagation path is the path 4, and the path 4 is associated with a receive beam 4. Because the path 2 and the path 4 are two paths obtained by reflecting, via the reflector 2, the positioning reference signal sent by the network device, the beam identifier 2 may be used as a beam identifier of the receive beam 4. In other words, the receive beam 4 and the receive beam 2 use the same beam identifier. Therefore, as shown in Table 3, the terminal device sends the TDOA of the path 4 and the beam identifier 2 of the receive beam 4 associated with the path 4 to the positioning device.

**Table 2**

| Measurement result | | Information about an associated propagation path | |
|---|---|---|---|
| First measurement result | A TDOA is 12 | Information about a first propagation path | Beam identifier 1 |
| Second measurement result | A TDOA is 14 | Information about a second propagation path | Beam identifier 1 |
| Third measurement result | A TDOA is 15 | Information about a third propagation path | Beam identifier 2 |
| Fourth measurement result | A TDOA is 13 | Information about a fourth propagation path | Beam identifier 2 |
| Fifth measurement result | A TDOA is 16 | Information about a fifth propagation path | Beam identifier 1 |
| Sixth measurement result | A TDOA is 12 | Information about a sixth propagation path | Beam identifier 2 |

It can be learned that in the technical solution in this application, in addition to reporting the first measurement result and the second measurement result, the first device further reports the information about the receive beam corresponding to the first measurement result and the information about the receive beam corresponding to the second measurement result, which may be specifically a beam identifier, an angle, or an angle range of the receive beam. The receive beam may be a path-level receive beam. This helps enable the positioning device to perform NLOS positioning based on the reported first measurement result, the reported information about the receive beam corresponding to the first measurement result, the reported second measurement result, and the reported information about the receive beam corresponding to the second measurement result.

Optionally, the first measurement result and the third measurement result are obtained by the first device by measuring, at the first moment, the positioning reference signal sent by the second device. The second measurement result and the fourth measurement result are obtained by the first device by measuring, at the second moment, the positioning reference signal sent by the second device. The fifth measurement result and the sixth measurement result are obtained by the first device by measuring, at the third moment, the positioning reference signal sent by the second device. The first moment, the second moment, and the third moment may be a plurality of different moments, or may be a same moment. This is not specifically limited in this application. Therefore, Table 2 may alternatively be represented as Table 3.

**Table 3**

| Time | First moment | Second moment | Third moment |
|---|---|---|---|
| TDOA (beam identifier 1) | 12 | 14 | 16 |
| TDOA (beam identifier 2) | 15 | 13 | 12 |

For example, as shown in FIG. 6, the first device is a network device, and the second device is a terminal device. The network device measures the positioning reference signal from the terminal device to obtain the first measurement result, namely, an RTOA and an AOA of the path 1, and the first propagation path is the path 1. As shown in Table 4, the network device sends the RTOA and the AOA of the path 1 and the label 1 of the path 1 to the positioning device. Optionally, the network device further measures the positioning reference signal from the terminal device to obtain the third measurement result, namely, an RTOA and an AOA of the path 2, and the third propagation path is the path 2. As shown in Table 4, the network device sends the RTOA and the AOA of the path 6 and the label 2 of the path 2 to the positioning device.

As shown in FIG. 7, the network device measures the positioning reference signal from the terminal device to obtain the second measurement result, namely, an RTOA and an AOA of the path 3, and the second propagation path is the path 3. Because the path 1 and the path 3 are two paths obtained by reflecting, via the reflector 1, the positioning reference signal sent by the network device, the path 3 may use the same label as the path 1, namely, the label 1. As shown in Table 4, the network device sends the RTOA and the AOA of the path 3 and the label 1 of the path 3 to the positioning device. Optionally, as shown in FIG. 7, the network device further measures the positioning reference signal from the terminal device to obtain the fourth measurement result, namely, an RTOA and an AOA of the path 4, and the fourth propagation path is the path 4. Because the path 2 and the path 4 are two paths obtained by reflecting, via the reflector 2, the positioning reference signal sent by the network device, the path 4 may use the same label as the path 3, namely, the label 2. As shown in Table 4, the network device sends the RTOA and the AOA of the path 4 and the label 2 of the path 4 to the positioning device. It can be learned that the positioning device may determine each reported measurement result and information about a propagation path corresponding to each measurement result.

**Table 4**

| Measurement result | | Information about an associated propagation path | |
|---|---|---|---|
| First measurement result | An RTOA is 12 and an AOA is 10 | Information about a first propagation path | Label 1 |
| Second measurement result | An RTOA is 14 and an AOA is 20 | Information about a second propagation path | Label 1 |
| Third measurement result | An RTOA is 15 and an AOA is 30 | Information about a third propagation path | Label 2 |
| Fourth measurement result | An RTOA is 13 and an AOA is 15 | Information about a fourth propagation path | Label 2 |
| Fifth measurement result | An RTOA is 16 and an AOA is 20 | Information about a fifth propagation path | Label 1 |
| Sixth measurement result | A TDOA is 12 and an AOA is -10 | Information about a sixth propagation path | Label 2 |

It can be learned that in the technical solution of this application, because the network device has a stronger processing capability, more information is obtained. For example, the network device may obtain map information, channel information, environment information, and the like, and the network device reports each measurement result and the information about the propagation path corresponding to each measurement result. In other words, the network device can report information about a propagation path at a finer granularity. This helps the positioning device perform high-accuracy positioning on the terminal device.

Optionally, the first measurement result and the third measurement result are obtained by the first device by measuring, at the first moment, the positioning reference signal sent by the second device. The second measurement result and the fourth measurement result are obtained by the first device by measuring, at the second moment, the positioning reference signal sent by the second device. The fifth measurement result and the sixth measurement result are obtained by the first device by measuring, at the third moment, the positioning reference signal sent by the second device. The first moment, the second moment, and the third moment may be a plurality of different moments, or may be a same moment. This is not specifically limited in this application. Therefore, Table 4 may alternatively be represented as Table 5.

**Table 5**

| Time | First moment | | Second moment | | Third moment | |
|---|---|---|---|---|---|---|
| Measurement quantity | RTOA | AOA | RTOA | AOA | RTOA | AOA |
| Label 1 | 12 | 10 | 14 | 20 | 16 | 30 |
| Label 2 | 15 | 30 | 13 | 15 | 12 | -10 |

For another example, as shown in Table 6 below, the first device is a network device, and the second device is a terminal device. The network device measures the positioning reference signal from the terminal device to obtain the first measurement result (namely, the RTOA and the AOA of the path 1), the third measurement result (namely, the RTOA and the AOA of the path 2), and the seventh measurement result (namely, the RTOA and the AOA of the path 3). The network device cannot detect the tenth measurement result (namely, the RTOA and the AOA of the path 4). Therefore, the RTOA and the AOA of the path 4 may be set to null. The network device may send the RTOA and the AOA of the path 1, the label 1 of the path 1, the RTOA and the AOA of the path 2, the label 2 of the path 2, the RTOA and the AOA of the path 3, the label 3 of the path 3, the RTOA and the AOA of the path 4, and the label 4 of the path 4 to the positioning device.

The network device measures the positioning reference signal from the terminal device again to obtain the second measurement result (namely, the RTOA and the AOA of the path 4), the fourth measurement result (namely, the RTOA and the AOA of the path 5), the eighth measurement result (namely, the RTOA and the AOA of the path 6) and the eleventh measurement result (namely, the RTOA and the AOA of the path 7). The path 4 and the path 1 are two paths obtained by reflecting, via a same reflector, the positioning reference signal sent by the terminal device. Therefore, the path 4 may use the same label as the path 1. The path 2 and the path 5 are two paths obtained by reflecting, via a same reflector, the positioning reference signal sent by the terminal device. Therefore, the path 5 may use the same label as the path 2. The path 6 and the path 3 are two paths obtained by reflecting, via a same reflector, the positioning reference signal sent by the terminal device. Therefore, the path 6 may use the same label as the path 3. The path 7 and the path 4 are two paths obtained by reflecting, via a same reflector, the positioning reference signal sent by the terminal device. Therefore, the path 7 may use the same label as the path 4. In this way, it is convenient for the positioning device to determine a status of monitoring each path by the network device.

**Table 6**

| Measurement result | | Information about an associated propagation path | |
|---|---|---|---|
| First measurement result | An RTOA is 12 and an AOA is 10 | Information about a first propagation path | Label 1 |
| Second measurement result | An RTOA is 14 and an AOA is 20 | Information about a second propagation path | Label 1 |
| Third measurement result | An RTOA is 15 and an AOA is 30 | Information about a third propagation path | Label 2 |
| Fourth measurement result | An RTOA is null and an AOA is null | Information about a fourth propagation path | Label 2 |
| Fifth measurement result | An RTOA is 16 and an AOA is 20 | Information about a fifth propagation path | Label 1 |
| Sixth measurement result | An RTOA is 13 and an AOA is -10 | Information about a sixth propagation path | Label 2 |
| Seventh measurement result | An RTOA is 18 and an AOA is 10 | Information about a seventh propagation path | Label 3 |
| Eighth measurement result | A TDOA is 17 and an AOA is 15 | Information about an eighth propagation path | Label 3 |
| Ninth measurement result | An RTOA is null and an AOA is null | Information about a ninth propagation path | Label 3 |
| Tenth measurement result | An RTOA is null and an AOA is null | Information about a tenth propagation path | Label 4 |
| Eleventh measurement result | An RTOA is 19 and an AOA is 50 | Information about an eleventh propagation path | Label 4 |
| Twelfth measurement result | An RTOA is 19 and an AOA is 60 | Information about a twelfth propagation path | Label 4 |

Optionally, the first measurement result (namely, the RTOA and the AOA of the path 1), the third measurement result (namely, the RTOA and the AOA of the path 2), the seventh measurement result (namely, the RTOA and the AOA of the path 3), and the tenth measurement result (namely, the RTOA and the AOA of the path 4) are all measurement results obtained by the first device by measuring, at the first moment, the positioning reference signal sent by the second device. The second measurement result, the fourth measurement result, the eighth measurement result, and the eleventh measurement result are all obtained by the first device by measuring, at the second moment, the positioning reference signal sent by the second device. The fifth measurement result, the sixth measurement result, the ninth measurement result, and the twelfth measurement result are all obtained by the first device by measuring, at the third moment, the positioning reference signal sent by the second device. The first moment, the second moment, and the third moment may be a plurality of different moments, or may be a same moment. This is not specifically limited in this application. In this case, Table 6 may be represented as Table 7.

**Table 7**

| Time | First moment | | Second moment | | Third moment | |
|---|---|---|---|---|---|---|
| Measurement quantity | RTOA | AOA | RTOA | AOA | RTOA | AOA |
| Label 1 | 12 | 10 | 14 | 20 | 16 | 30 |
| Label 2 | 15 | 30 | - | - | 13 | -10 |
| Label 3 | 18 | 10 | 17 | 15 | - | - |
| Label 4 | - | - | 19 | 50 | 19 | 60 |

Optionally, an association between the information about the first propagation path and the information about the second propagation path indicates an association between the first measurement result and the second measurement result. In other words, the information about the first propagation path and the information about the second propagation path indicate the association between the first measurement result and the second measurement result.

Optionally, when the information about the first propagation path is associated with the information about the second propagation path, it indicates that the first measurement result is associated with the second measurement result. When the information about the first propagation path is not associated with the information about the second propagation path, it indicates that the first measurement result is not associated with the second measurement result.

In a possible implementation, when the information about the first propagation path is partially or completely the same as the information about the second propagation path, it indicates that the first measurement result is associated with the second measurement result; or when the information about the first propagation path is partially or completely different from the information about the second propagation path, it indicates that the first measurement result is not associated with the second measurement result.

For example, as shown in FIG. 4 and FIG. 5, the first propagation path (namely, the path 1) is associated with the receive beam 1, and the second propagation path (namely, the path 3) is associated with the receive beam 3. The path 1 and the path 3 are two paths obtained by reflecting, via the reflector 1, the positioning reference signals that are respectively sent by the terminal device at the first moment and the second moment. Therefore, both the receive beam 1 and the receive beam 3 may use the beam identifier 1. Therefore, as shown in Table 3, the terminal device sends, to the positioning device, the TDOA of the path 1 obtained by the terminal device by measuring the positioning reference signal at the first moment and the TDOA of the path 3 obtained by the terminal device by measuring the positioning reference signal at the second moment. It can be learned from Table 3 that, both the TDOA of the path 1 obtained by the terminal device by measuring the positioning reference signal at the first moment and the TDOA of the path 3 obtained by the terminal device by measuring the positioning reference signal at the second moment correspond to the beam identifier 1. In this way, it is convenient to indicate to the positioning device that the first measurement result is associated with the second measurement result. The positioning device may position the terminal device by combining the first measurement result and the second measurement result. This helps improve positioning accuracy. It can be learned from Table 3 that the positioning device may determine a change of the TDOA obtained through measurement on the path corresponding to the beam identifier 1. The terminal device measures, at the first moment, the positioning reference signal sent by the network device, to learn that the TDOA on the path corresponding to the beam identifier 1 is 12. The terminal device measures, at the second moment, the positioning reference signal sent by the network device, to learn that the TDOA on the path corresponding to the beam identifier 1 is 14. It can be learned that the TDOA obtained through measurement on the path corresponding to the beam identifier 1 is increasingly large.

For example, as shown in FIG. 6 and FIG. 7, the first propagation path is the path 1, and the second propagation path is the path 3. The path 1 and the path 3 are two paths that are respectively measured by the network device at the first moment and the second moment and that are obtained by reflecting, via the reflector 1, the positioning reference signals sent by the terminal device. Therefore, the path 1 and the path 3 may use a same label. As shown in Table 5, the network device sends, to the positioning device, the RTOA and the AOA of the path 1 that are obtained by the network device by measuring, at the first moment, the positioning reference signal sent by the terminal device and the RTOA and the AOA of the path 3 that are obtained by the network device by measuring, at the second moment, the positioning reference signal sent by the terminal device. It can be learned from Table 5 that the RTOA and the AOA of the path 1 and the RTOA and the AOA of the path 3 all correspond to the label 1. In this way, it is convenient to indicate to the positioning device that the first measurement result is associated with the second measurement result. In this way, it is convenient to indicate to the positioning device that the first measurement result is associated with the second measurement result. The positioning device may position the terminal device by combining the first measurement result and the second measurement result. This helps improve positioning accuracy. It can be learned from Table 5 that the positioning device may determine changes of the RTOA and the AOA that are obtained through measurement on the path corresponding to the label 1. The network device measures, at the first moment, the positioning reference signal sent by the terminal device, to learn that the RTOA of the path corresponding to the label 1 is 12, and the AOA is 10. The network device measures, at the second moment, the positioning reference signal sent by the terminal device, to learn that the RTOA of the path corresponding to the label 1 is 14, and the AOA is 20. Both the RTOA and the AOA that are obtained through measurement on the path corresponding to the label 1 are increasingly large.

For example, as shown in FIG. 4 and FIG. 5, the first propagation path (namely, the path 1) and the second propagation path (namely, the path 3) are two paths obtained by reflecting, via the reflector 1, the positioning reference signals that are respectively sent by the terminal device at the first moment and the second moment. The information about the first propagation path includes an identifier of the reflector 1, and the information about the second propagation path includes an identifier of the reflector 2. Therefore, it can be learned that the information about the first propagation path is the same as the information about the second propagation path, indicating that the first measurement result is associated with the second measurement result. The positioning device may position the terminal device by combining the first measurement result and the second measurement result. This helps improve positioning accuracy.

For example, the information about the first propagation path includes the angle value of the receive beam associated with the first propagation path and the identifier of the reflector associated with the first propagation path. The information about the second propagation path includes the angle value of the receive beam associated with the second propagation path and the identifier of the reflector of the second propagation path. The angle value of the receive beam associated with the first propagation path is not equal to the angle value of the receive beam associated with the second propagation path, and the identifier of the reflector associated with the first propagation path is the same as the identifier of the reflector of the second propagation path. Therefore, it can be learned that the information about the first propagation path is partially the same as the information about the second propagation path, indicating that the first measurement result is associated with the second measurement result. The positioning device may position the terminal device by combining the first measurement result and the second measurement result. This helps improve positioning accuracy.

For example, the information about the first propagation path includes the label of the first propagation path, the beam identifier of the receive beam associated with the first propagation path, and the priority of the first propagation path. The information about the second propagation path includes the label of the second propagation path, the beam identifier of the receive beam associated with the second propagation path, and the priority of the second propagation path. The label of the first propagation path is the same as the label of the second propagation path, the beam identifier of the receive beam associated with the first propagation path is different from the beam identifier of the receive beam associated with the second propagation path, and the priority of the first propagation path is different from the priority of the second propagation path. Therefore, it can be learned that the information about the first propagation path is partially the same as the information about the second propagation path, indicating that the first measurement result is associated with the second measurement result. The positioning device may position the terminal device by combining the first measurement result and the second measurement result. This helps improve positioning accuracy.

It can be learned that the first device reports the first measurement result and the second measurement result, and further reports the information about the first propagation path corresponding to the first measurement result and the information about the second propagation path corresponding to the second measurement result. In this way, it is convenient for the positioning device to determine the association between the first measurement result and the second measurement result based on the information about the first propagation path and the information about the second propagation path. If the information about the first propagation path is partially or completely the same as the information about the second propagation path, the positioning device can be enabled to determine time-varying changes of a measurement parameter of the first propagation path and a measurement parameter of the second propagation path based on the first measurement result and the second measurement result. Further, if the information about the first propagation path is partially or completely the same as the information about the second propagation path, it indicates that the first measurement result is associated with the second measurement result, so that the positioning device is enabled to position the terminal device by combining the first measurement result and the second measurement result. Therefore, this helps implement high-accuracy positioning on the terminal device by the positioning device in an NLOS scenario.

For another example, as shown in FIG. 4, the first propagation path (namely, the path 1) is a propagation path that is between the terminal device and the network device and that is obtained by the terminal device by measuring, at the first moment, the positioning reference signal sent by the network device. As shown in FIG. 5, the second propagation path (namely, the path 4) is a propagation path that is between the terminal device and the network device and that is obtained by the terminal device by measuring, at the second moment, the positioning reference signal sent by the network device. The information about the first propagation path includes the label 1 of the path 1, and the information about the second propagation path includes the label 2 of the path 4. Alternatively, the information about the first propagation path includes the information about the reflector 1 associated with the path 1, and the information about the second propagation path includes the information about the reflector 2 associated with the path 4. Alternatively, the information about the first propagation path includes the beam identifier 1 of the receive beam 1 associated with the path 1, and the information about the second propagation path includes the beam identifier 2 of the receive beam 4 associated with the path 4. Therefore, it can be learned that the information about the first propagation path is different from the information about the second propagation path, indicating that the first measurement result is not associated with the second measurement result.

In another possible implementation, when the information about the first propagation path is similar to the information about the second propagation path, it indicates that the first measurement result is associated with the second measurement result; or when the information about the first propagation path is not similar to the information about the second propagation path, it indicates that the first measurement result is not associated with the second measurement result.

Optionally, the information about the first propagation path includes the beam identifier of the at least one receive beam associated with the first propagation path, and the information about the second propagation path includes the beam identifier of the at least one receive beam associated with the second propagation path. That the information about the first propagation path is similar to the information about the second propagation path includes: The beam identifier of the at least one receive beam associated with the first propagation path and the beam identifier of the at least one receive beam associated with the second propagation path belong to a same category. For example, as shown in FIG. 4 and FIG. 5, the first propagation path (namely, the path 1) is associated with the receive beam 1, and the second propagation path (namely, the path 3) is associated with the receive beam 3. The path 1 and the path 3 are two paths obtained by reflecting, via the reflector 1, the positioning reference signals that are respectively sent by the terminal device at the first moment and the second moment. The beam identifier of the receive beam 1 is the beam identifier 1, and the beam identifier of the receive beam 3 is the beam identifier 3. In other words, the information about the first propagation path includes the beam identifier 1, and the information about the second propagation path includes the beam identifier 3. The beam identifier 1 and the beam identifier 3 are beam identifiers of the same category. Therefore, it can be learned that the information about the first propagation path is similar to the information about the second propagation path, indicating that the first measurement result is associated with the second measurement result.

Optionally, the information about the first propagation path includes the label of the first propagation path, and the information about the second propagation path includes the label of the second propagation path. That the information about the first propagation path is similar to the information about the second propagation path includes: The label of the first propagation path and the label of the second propagation path belong to a same category. For example, as shown in FIG. 4 and FIG. 5, or as shown in FIG. 6 and FIG. 7, the first propagation path is the path 1, and the second propagation path is the path 3. The path 1 and the path 3 are two paths that are respectively measured by the network device at the first moment and the second moment and that are obtained by reflecting, via the reflector 1, the positioning reference signals sent by the terminal device. Therefore, the label of the path 1 is the label 1, and the label of the path 3 is the label 3. In other words, the information about the first propagation path includes the label 1, and the information about the second propagation path includes the label 3. The label 1 and the label 3 belong to the same category. For example, labels under the category indicates that propagation paths are associated with a same reflector. Therefore, it can be learned that the information about the first propagation path is similar to the information about the second propagation path, indicating that the first measurement result is associated with the second measurement result.

Optionally, the information about the first propagation path includes the angle value of the receive beam associated with the first propagation path, and the information about the second propagation path includes the angle value of the receive beam associated with the second propagation path. That the information about the first propagation path is similar to the information about the second propagation path includes: A difference between the angle value of the receive beam associated with the first propagation path and the angle value of the receive beam associated with the second propagation path is less than or equal to a specific threshold. For example, as shown in FIG. 4 and FIG. 5, the first propagation path (namely, the path 1) is associated with the receive beam 1, and the second propagation path (namely, the path 3) is associated with the receive beam 3. The path 1 and the path 3 are two paths obtained by reflecting, via the reflector 1, the positioning reference signals that are respectively sent by the terminal device at the first moment and the second moment. The information about the first propagation path includes the angle value of the receive beam 1, and the information about the second propagation path includes the angle value of the receive beam 3. If a difference between the angle value of the receive beam 1 and the angle value of the receive beam 3 is less than or equal to the specific threshold, it may be understood as that information about the receive beam 1 is similar to information about the receive beam 3. Therefore, it can be learned that the information about the first propagation path is similar to the information about the second propagation path, indicating that the first measurement result is associated with the second measurement result.

Optionally, the information about the first propagation path includes the label of the receive beam associated with the first propagation path. The information about the second propagation path includes the label of the receive beam associated with the second propagation path, for example, a receive beam identifier (RxbeamID). If the label of the receive beam associated with the first propagation path is the same as the label of the receive beam associated with the second propagation path, it indicates that the first measurement result is associated with the second measurement result. If the label of the receive beam associated with the first propagation path is different from the label of the receive beam associated with the second propagation path, it indicates that the first measurement result is not associated with the second measurement result. For example, as shown in FIG. 4 and FIG. 5, or as shown in FIG. 6 and FIG. 7, the first propagation path is the path 1, and the second propagation path is the path 3. The path 1 and the path 3 are two paths that are respectively measured by the network device at the first moment and the second moment and that are obtained by reflecting, via the reflector 1, the positioning reference signals sent by the terminal device. Therefore, the label of the path 1 is the label 1, and the label of the path 3 is the label 1. In other words, the information about the first propagation path includes the label 1, and the information about the second propagation path includes the label 1. Therefore, it can be learned that the information about the first propagation path is the same as the information about the second propagation path, indicating that the first measurement result is associated with the second measurement result.

Optionally, an association between the information about the third propagation path and the information about the fourth propagation path indicates an association between the third measurement result and the fourth measurement result. For this implementation, refer to the related descriptions in which the association between the information about the first propagation path and the information about the second propagation path indicates the association between the first measurement result and the second measurement result. Details are not described herein again.

For example, as shown in FIG. 4, the first device is a terminal device, and the second device is a network device. The terminal device measures the positioning reference signal from the network device at the first moment by using the receive beam 1, to obtain the first measurement result (namely, the TDOA of the path 1) and the third measurement result (namely, the TDOA of the path 2). The first propagation path is the path 1, and the path 1 is associated with the receive beam 1. The third propagation path is the path 2, and the path 2 is associated with the receive beam 2. As shown in Table 3, the terminal device sends, to the positioning device, the TDOA of the path 1 measured by the terminal device at the first moment, the beam identifier 1 of the receive beam 1 associated with the path 1, the TDOA of the path 2 measured by the terminal device at the first moment, and the beam identifier 2 of the receive beam 2 associated with the path 2.

As shown in FIG. 5, the terminal device 501 measures the positioning reference signal from the network device 502 at the second moment by using the receive beam 3 to obtain the second measurement result (namely, the TDOA of the path 3) and the fourth measurement result (namely, the TDOA of the path 4). The second propagation path is the path 3, and the path 3 is associated with the receive beam 3. The path 1 and the path 3 are two paths obtained by passing by the same reflector (reflector 1) by the positioning reference signals sent by the network device. Therefore, the receive beam 1 and the receive beam 3 may use the same beam identifier. In other words, the beam identifier of the receive beam 3 is the beam identifier 1. The fourth propagation path is the path 4, and the path 4 is associated with the receive beam 4. The path 2 and the path 4 are two paths obtained by passing by the same reflector (reflector 2) by the positioning reference signals sent by the network device. Therefore, the receive beam 2 and the receive beam 4 may use the same beam identifier. In other words, the beam identifier of the receive beam 4 is the beam identifier 2. As shown in Table 3, the terminal device sends, to the positioning device, the TDOA of the path 3 measured by the terminal device at the second moment, the beam identifier 1 of the receive beam 3 associated with the path 3, the TDOA of the path 4 measured by the terminal device at the second moment, and the beam identifier 2 of the receive beam 4 associated with the path 4.

In this application, Table 2 to Table 5 show that the first device reports each measurement result of the first device and information about the corresponding propagation path. The first device may further present a birth-death status of a propagation path (including appearance and disappearance of the propagation path) based on reported content. For example, as shown in Table 7, the network device can detect propagation paths of the label 1 at the first moment, the second moment, and the third moment. The network device can detect a propagation path of the label 2 at the first moment, cannot detect a propagation path of the label 2 at the second moment, and can detect a propagation path of the label 2 at the third moment. The network device can detect propagation paths of the label 3 at both the first moment and the second moment, but cannot detect a propagation path of the label 3 at the third moment. The network device cannot detect a propagation path of the label 4 at the first moment, but can detect propagation paths of the label 4 at both the second moment and the third moment. A reason why the network device can determine birth and death of the propagation path of each label is that the network device can obtain, based on the positioning reference signal, more comprehensive changes of a channel and measurement parameters of propagation paths of different labels at different moments. In this way, the birth and death of the propagation path of each label can be determined. It can be learned that, after the positioning device obtains the information shown in Table 7, the positioning device can determine a change of a measurement parameter of the propagation path of each label at any moment and the birth or death of the propagation path of each label. This helps improve accuracy of positioning the terminal device by the positioning device.

Optionally, the embodiment shown in FIG. 3 further includes step 302d. Step 302d may be performed before step 302c.

302d: The positioning device sends a second request to the first device. Correspondingly, the first device receives the second request from the positioning device.

For the second request, refer to the related descriptions of the first request.

It should be noted that there is no fixed execution sequence between step 302d and step 302b. Step 302d may be performed before step 302b, or step 302b is performed before step 302d, or step 302d and step 302d are simultaneously performed based on a case. This is not specifically limited in this application.

Optionally, step 303 specifically includes: The positioning device positions the first device or the second device based on the first measurement result, the information about the first propagation path, the second measurement result, and the information about the second propagation path.

In a possible implementation, when the information about the second propagation path is partially or completely the same as the information about the first propagation path, the positioning device determines that the first measurement result is associated with the second measurement result, and the positioning device positions the first device or the second device based on the first measurement result and the second measurement result; or when the information about the second propagation path is partially or completely different from the information about the first propagation path, the positioning device determines that the first measurement result is not associated with the second measurement result, and the positioning device positions the first device or the second device separately based on the first measurement result or the second measurement result.

In another possible implementation, when the information about the second propagation path is similar to the information about the first propagation path, the positioning device determines that the first measurement result is associated with the second measurement result, and the positioning device positions the first device or the second device based on the first measurement result and the second measurement result, or when the information about the second propagation path is not similar to the information about the first propagation path, the positioning device determines that the first measurement result is not associated with the second measurement result, and the positioning device positions the first device or the second device separately based on the first measurement result or the second measurement result.

It can be learned that, when the information about the second propagation path is partially the same as, completely the same as, or similar to the information about the first propagation path, the positioning device may position the first device or the second device by combining the first measurement result and the second measurement result and using a corresponding algorithm. This improves positioning accuracy. For example, the positioning device may perform high-accuracy positioning on the terminal device according to a radio frequency simultaneous localization and mapping (radio frequency simultaneous localization and mapping, RF-SLAM) algorithm and by combining the first measurement result and the second measurement result. For example, as shown in FIG. 8B, the terminal device is at the coordinates (x, y) at the moment 1. The terminal device measures, at the moment 1, the positioning reference signal sent by the physical base station, to obtain the measurement result of the path 1, for example, *θ*₁ shown in FIG. 8B. The terminal device sends *θ*₁ and the label of the corresponding path 1 to the positioning device. The terminal device is at the coordinates (x+a, y+b) at the moment 2, and a and b are known. The terminal device measures, at the moment 2, the positioning reference signal sent by the physical base station, to obtain the measurement result of the path 2, for example, *θ*₂ shown in FIG. 8B. The terminal device sends *θ*₂ and the label of the path 2 to the positioning device. Because the path 1 and the path 2 are two propagation paths obtained through reflection via the same reflective surface, the label of the path 1 is the same as or related to the label of the path 2. The correlation means that the label of the path 1 is associated with the label of the path 2. For example, the label of the path 1 and the label of the path 2 belong to the same category. The positioning device may determine, based on the label of the path 1 and the label of the path 2, to use *θ*₁ and *θ*₂ to position the terminal device. Therefore, the positioning device may determine x and y based on *θ*₁ and *θ*₂. In this way, the terminal device is positioned.

It should be noted that in the embodiment shown in FIG. 3, the technical solution of this application is described by using an example in which the first device measures, at the first moment, the positioning reference signal sent by the second device to obtain the first measurement result, and measures, at the second moment, the positioning reference signal sent by the second device to obtain the second measurement result. During actual application, the first device may further measure, at more moments, the positioning reference signal sent by the second device to obtain more measurement results, and send the more measurement results and information about propagation paths corresponding to the more measurement results to the positioning device. In this way, it is convenient for the positioning device to combine, as reported by the first device, the measurement results obtained through measurement at the more moments and information about the corresponding propagation paths. This improves positioning accuracy. This is not specifically limited in this application.

It can be learned that in this application, the first device reports a plurality of measurement results and propagation path information corresponding to each of the plurality of measurement results. The positioning device may associate measurement results corresponding to same propagation path information, and position the terminal device based on the measurement results corresponding to the same propagation path information. In this way, the positioning device implements high-accuracy positioning on the terminal device in the NLOS scenario. For example, as shown in FIG. 8A, the first device is a network device, and the second device is a terminal device. The network device measures, at the moment 1, the positioning reference signal sent by the terminal device, to obtain the measurement result of the path 1, and sends the measurement result of the path 1 and the information about the path 1 to the positioning device. The network device measures, at the moment 2, the positioning reference signal sent by the terminal device, to obtain the measurement result of the path 2, and sends the measurement result of the path 2 and the information about the path 2 to the positioning device. The network device measures, at the moment 3, the positioning reference signal sent by the terminal device, to obtain the measurement result of the path 3, and sends the measurement result of the path 3 and the information about the path 3 to the positioning device. The network device measures, at the moment 4, the positioning reference signal sent by the terminal device, to obtain the measurement result of the path 4, and sends the measurement result of the path 4 and the information about the path 4 to the positioning device. It can be learned from FIG. 8A that the path 1 to the path 4 are four propagation paths obtained by reflecting, via the same reflector (namely, a wall), positioning reference signals sent by the terminal device at four moments. Therefore, the positioning device may continuously track a change of measurement parameters on the path 1 to the path 4 based on the measurement results and the information about the propagation paths that are reported by the network device. As shown in FIG. 8A, the positioning device may reconstruct locations of the wall and the virtual base station, to position the terminal device.

In this embodiment of this application, the first device measures the positioning reference signal sent by the second device, to obtain the first measurement result, where the first measurement result corresponds to the first propagation path, and the first propagation path is a propagation path between the first device and the second device; and the first device sends the first measurement result and the information about the first propagation path to the positioning device. In this way, the positioning device learns of the information about the propagation path corresponding to the first measurement result. The first propagation path is any propagation path between the first device and the second device. This helps improve accuracy of positioning the first device or the second device by the positioning device. For example, this helps enable the positioning device to position the first device or the second device based on a plurality of measurement results that are reported by the first device and that have same propagation path information, to implement high-accuracy positioning on the first device or the second device. This helps improve accuracy of positioning the terminal device in the NLOS scenario.

The following describes communication apparatuses provided in embodiments of this application.

FIG. 9 is a diagram of a structure of a communication apparatus according to an embodiment of this application. As shown in FIG. 9, a communication apparatus 900 includes a processing module 901 and a transceiver module 902.

The processing module 901 is configured to process data. The transceiver module 902 may implement a corresponding communication function. The transceiver module 902 may also be referred to as a communication interface or a communication module.

Optionally, the communication apparatus 900 may further include a storage module. The storage module may be configured to store instructions and/or data. The processing module 901 may read the instructions and/or the data in the storage module, so that the communication apparatus implements the foregoing method embodiments.

The communication apparatus 900 is configured to perform the process performed by the first device in the embodiment shown in FIG. 3. For details, refer to the related descriptions in the foregoing embodiments. For example, the processing module 901 is configured to perform a processing-related operation on the first device side in the embodiment shown in FIG. 3. The transceiver module 902 is configured to perform receiving and sending-related operations on the first device side in the embodiment shown in FIG. 3. For example, the communication apparatus 900 may be configured to perform the following solution.

The processing module 901 is configured to measure a positioning reference signal sent by a second device, to obtain a first measurement result, where the first measurement result corresponds to a first propagation path, and the first propagation path is a propagation path between the communication apparatus 900 and the second device; and the transceiver module 902 is configured to send the first measurement result and information about the first propagation path to a positioning device.

Optionally, the transceiver module 902 may include a sending module and a receiving module. The sending module is configured to perform sending operations in the foregoing method embodiments. The receiving module is configured to perform receiving operations in the foregoing method embodiments.

It should be noted that the communication apparatus 900 may include the sending module, but does not include the receiving module. Alternatively, the communication apparatus 900 may include the receiving module, but does not include the sending module. This may be specifically determined based on whether the foregoing solution performed by the communication apparatus 900 includes a sending action and a receiving action.

It should be understood that specific processes in which the modules perform the foregoing corresponding processes have been described in detail in the foregoing method embodiments. For brevity, details are not described herein again.

The processing module 901 in the foregoing embodiment may be implemented by at least one processor or processor-related circuit. The transceiver module 902 may be implemented by a transceiver or a transceiver-related circuit. The transceiver module 902 may also be referred to as a communication module or a communication interface. The storage module may be implemented by at least one memory.

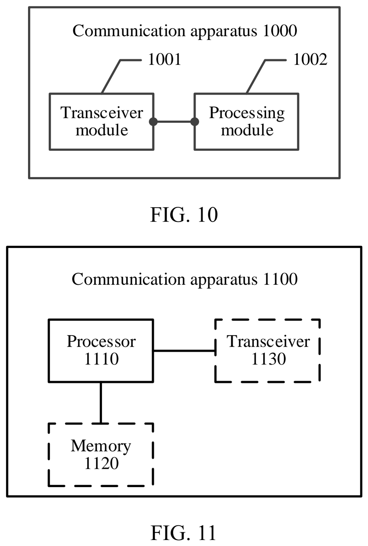

FIG. 10 is a diagram of a structure of a communication apparatus according to an embodiment of this application. As shown in FIG. 10, a communication apparatus 1000 includes a transceiver module 1001 and a processing module 1002.

The processing module 1002 is configured to process data. The transceiver module 1001 may implement a corresponding communication function. The transceiver module 1001 may also be referred to as a communication interface or a communication module.

Optionally, the communication apparatus 1000 may further include a storage module. The storage module may be configured to store instructions and/or data. The processing module 1002 may read the instructions and/or the data in the storage module, so that the communication apparatus implements the foregoing method embodiments.

The communication apparatus 1000 is configured to perform the process performed by the positioning device in the embodiment shown in FIG. 3. For details, refer to the related descriptions in the foregoing embodiments. For example, the processing module 1002 is configured to perform a processing-related operation on the positioning device side in the embodiment shown in FIG. 3. The transceiver module 1001 is configured to perform receiving and sending-related operations on the positioning device side in the embodiment shown in FIG. 3. For example, the communication apparatus 1000 may be configured to perform the following solution.

The transceiver module 1001 is configured to receive a first measurement result and information about a first propagation path from a first device, where the first measurement result is a measurement result obtained by the first device by measuring a positioning reference signal sent by a second device, the first measurement result corresponds to the first propagation path, and the first propagation path is a propagation path between the first device and the second device; and the processing module 1002 is configured to position the first device or the second device based on the first measurement result and the information about the first propagation path.

Optionally, the transceiver module 1001 may include a sending module and a receiving module. The sending module is configured to perform sending operations in the foregoing method embodiments. The receiving module is configured to perform receiving operations in the foregoing method embodiments.

It should be noted that the communication apparatus 1000 may include the sending module, but does not include the receiving module. Alternatively, the communication apparatus 1000 may include the receiving module, but does not include the sending module. This may be specifically determined based on whether the foregoing solution performed by the communication apparatus 1000 includes a sending action and a receiving action.

It should be understood that specific processes in which the modules perform the foregoing corresponding processes have been described in detail in the foregoing method embodiments. For brevity, details are not described herein again.

The processing module 1002 in the foregoing embodiment may be implemented by at least one processor or processor-related circuit. The transceiver module 1001 may be implemented by a transceiver or a transceiver-related circuit. The transceiver module 1001 may also be referred to as a communication module or a communication interface. The storage module may be implemented by at least one memory.

An embodiment of this application further provides a communication apparatus 1100. As shown in FIG. 11, the communication apparatus 1100 includes a processor 1110. The processor 1110 is coupled to the memory 1120. The memory 1120 is configured to store a computer program or instructions and/or data. The processor 1110 is configured to execute the computer program or the instructions and/or the data stored in the memory 1120, so that the methods in the foregoing method embodiments are performed.

Optionally, the communication apparatus 1100 includes one or more processors 1110.

Optionally, as shown in FIG. 11, the communication apparatus 1100 may further include the memory 1120.

Optionally, the communication apparatus 1100 may include one or more memories 1120.

Optionally, the memory 1120 and the processor 1110 may be integrated, or are separately disposed.

Optionally, as shown in FIG. 11, the communication apparatus 1100 may further include a transceiver 1130. The transceiver 1130 is configured to receive and/or send a signal. For example, the processor 1110 is configured to control the transceiver 1130 to receive and/or send the signal.

The communication apparatus 1100 is configured to implement an operation performed by the first device or the positioning device in the foregoing method embodiments.

This application further provides a communication apparatus 1200. The communication apparatus 1200 may be a terminal device, a processor in a terminal device, or a chip. The communication apparatus 1200 may be configured to perform an operation performed by the first device in the foregoing method embodiments.

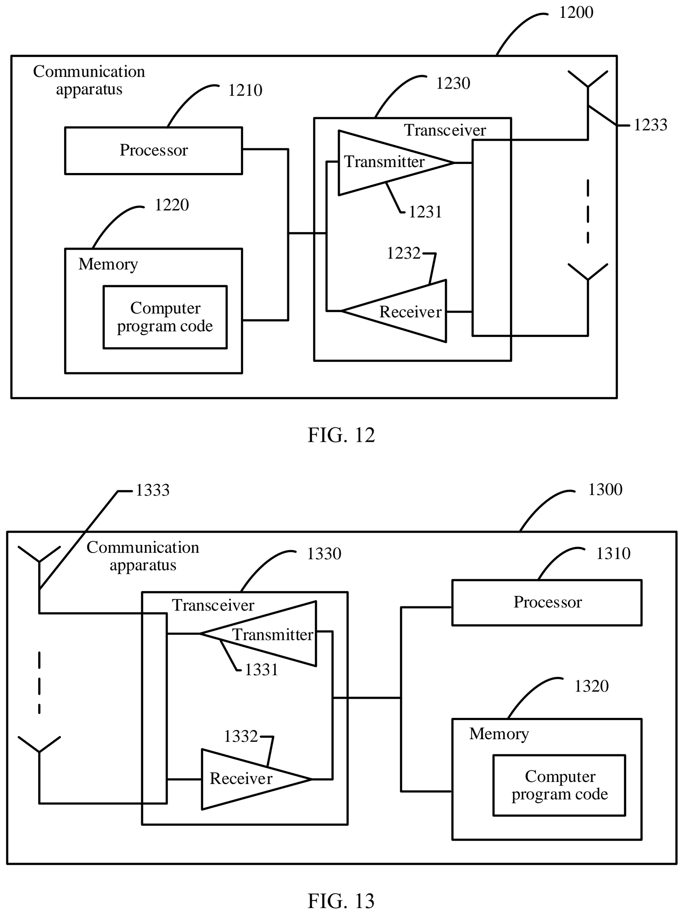

When the communication apparatus 1200 is the terminal device, FIG. 12 is a simplified diagram of a structure of the terminal device. As shown in FIG. 12, the terminal device includes a processor, a memory, and a transceiver. The memory may store computer program code. The transceiver includes a transmitter 1231, a receiver 1232, a radio frequency circuit (not shown in the figure), an antenna 1233, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus may include a touchscreen, a display, a keyboard, or the like. The input/output apparatus is mainly configured to receive data input by a user and output data to the user. It should be noted that some types of terminal devices may have no input/output apparatus.

When needing to send data, after performing baseband processing on to-be-sent data, the processor outputs a baseband signal to the radio frequency circuit. Then, the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna. The radio frequency circuit converts the radio frequency signal into a baseband signal, and outputs the baseband signal to the processor. The processor converts the baseband signal into data and processes the data. For ease of description, FIG. 12 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver module of the terminal device, and the processor that has a processing function may be considered as a processing module of the terminal device.

As shown in FIG. 12, the terminal device includes a processor 1210, a memory 1220, and a transceiver 1230. The processor 1210 may also be referred to as a processing unit, a processing board, a processing module, a processing apparatus, or the like. The transceiver 1230 may also be referred to as a transceiver unit, a transceiver machine, a transceiver apparatus, or the like.

Optionally, a device configured to implement a receiving function in the transceiver 1230 is considered as a receiving module, and a device configured to implement a sending function in the transceiver 1230 is considered as a sending module. In other words, the transceiver 1230 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmit module, a transmitter circuit, or the like.

The processor 1201 is configured to perform a processing action on the first device side in the embodiment shown in FIG. 3. The transceiver 1230 is configured to perform sending and receiving actions on the first device side in the embodiment shown in FIG. 3.

It should be understood that FIG. 12 is merely an example rather than a limitation. The terminal device including the transceiver module and the processing module may not depend on the structure shown in FIG. 9 or FIG. 12.

When the communication apparatus 1200 is a chip, the chip includes a processor, a memory, and a transceiver. The transceiver may be an input/output circuit or a communication interface. The processor may be a processing module, a microprocessor, or an integrated circuit integrated on the chip. The sending operation performed by the first device in the foregoing method embodiments may be understood as an output of the chip, and the receiving operation performed by the first device in the foregoing method embodiments may be understood as an input of the chip.

This application further provides a communication apparatus 1300. The communication apparatus 1300 may be a network device or a chip. The communication apparatus 1300 may be configured to perform an operation performed by the first device in the embodiment shown in FIG. 3.

When the communication apparatus 1300 is an access network device, for example, a base station, FIG. 13 is a simplified diagram of a structure of the base station. The base station includes a part 1310, a part 1320, and a part 1330.

The part 1310 is mainly configured to: perform baseband processing, control the base station, and the like. The part 1310 is usually a control center of the base station, may be usually referred to as a processor, and is configured to control the base station to perform a processing operation on the first device side in the foregoing method embodiments.

The part 1320 is mainly configured to store computer program code and data.

The part 1330 is mainly configured to receive and send a radio frequency signal, and perform conversion between the radio frequency signal and a baseband signal. The part 1330 may be usually referred to as a transceiver module, a transceiver machine, a transceiver circuit, a transceiver, or the like. The transceiver module in the part 1330 may also be referred to as a transceiver machine, a transceiver, or the like, and includes an antenna 1333 and a radio frequency circuit (not shown in the figure). The radio frequency circuit is mainly configured to perform radio frequency processing. Optionally, in the part 1330, a device configured to implement a receiving function may be considered as a receiver, and a device configured to implement a sending function may be considered as a transmitter. In other words, the part 1330 includes a receiver 1332 and a transmitter 1331. The receiver may also be referred to as a receiving module, a receiver machine, a receiver circuit, or the like, and the transmitter may be referred to as a transmit module, a transmitter machine, a transmitter circuit, or the like.

The part 1310 and the part 1320 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 1330 is configured to perform a receiving and sending-related process performed by the first device in the embodiment shown in FIG. 3. The processor in the part 1310 is configured to perform a processing-related process performed by the first device in the embodiment shown in FIG. 3.

It should be understood that FIG. 13 is merely an example rather than a limitation. The network device including the processor, the memory, and the transceiver may not depend on the structure shown in FIG. 9 or FIG. 13.

When the communication apparatus 1300 is a chip, the chip includes a transceiver, a memory, and a processor. The transceiver may be an input/output circuit or a communication interface. The processor is a processor, a microprocessor, or an integrated circuit integrated on the chip. The sending operation performed by the first device in the foregoing method embodiments may be understood as an output of the chip, and the receiving operation performed by the first device in the foregoing method embodiments may be understood as an input of the chip.

An embodiment of this application further provides a computer-readable storage medium. The computer-readable storage medium stores computer instructions used to implement the method performed by the first device or the positioning device in the foregoing method embodiments.

For example, when the computer program is executed by a computer, the computer is enabled to implement the method performed by the first device or the positioning device in the foregoing method embodiments.

An embodiment of this application further provides a computer program product including instructions. When the instructions are executed by a computer, the computer is enabled to implement the method performed by the first device or the positioning device in the foregoing method embodiments.

An embodiment of this application further provides a communication system. The communication system includes the first device in the foregoing embodiments and the positioning device in the foregoing embodiments.

An embodiment of this application further provides a chip apparatus including a processor, configured to invoke a computer program or computer instructions stored in a memory, so that the processor performs the method in the embodiment shown in FIG. 3.

In a possible implementation, an input of the chip apparatus corresponds to the receiving operation in the embodiment shown in FIG. 3, and an output of the chip apparatus corresponds to the sending operation in the embodiment shown in FIG. 3.

Optionally, the processor is coupled to the memory through an interface.

Optionally, the chip apparatus further includes the memory, and the memory stores the computer program or the computer instructions.

The processor mentioned in any of the foregoing descriptions may be a general-purpose central processing unit, a microprocessor, an application-specific integrated circuit (application-specific integrated circuit, ASIC), or one or more of integrated circuits configured to control program execution of the method provided in embodiment shown in FIG. 3. The memory mentioned in any of the foregoing descriptions may be a read-only memory (read-only memory, ROM), another type of static storage device that can store static information and instructions, a random access memory (random access memory, RAM), or the like.

It can be clearly understood by persons skilled in the art that, for convenient and brief description, for explanations and beneficial effect of related content in any one of the communication apparatuses provided above, refer to the corresponding method embodiments provided above. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, a part that essentially contributes to the technical solutions of this application or all or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A signal measurement and reporting method, wherein the method comprises:
measuring, by a first device, a positioning reference signal sent by a second device, to obtain a first measurement result, wherein the first measurement result corresponds to a first propagation path, and the first propagation path is a propagation path between the first device and the second device; and
sending, by the first device, the first measurement result and information about the first propagation path to a positioning device.

2. A positioning method, wherein the method comprises:
receiving, by a positioning device, a first measurement result and information about a first propagation path from a first device, wherein the first measurement result is a measurement result obtained by the first device by measuring a positioning reference signal sent by a second device, the first measurement result corresponds to the first propagation path, and the first propagation path is a propagation path between the first device and the second device; and
positioning, by the positioning device, the first device or the second device based on the first measurement result and the information about the first propagation path.

3. The method according to claim 1 or 2, wherein the information about the first propagation path comprises at least one of the following:
a label of the first propagation path;
an identifier of the first propagation path;
a random value of the first propagation path;
a name of the first propagation path;
information about a reflector associated with the first propagation path;
information about a reflective surface associated with the first propagation path;
a temporary identifier RPTI of the first propagation path;
a priority of the first propagation path; or
information about at least one receive beam associated with the first propagation path.

4. The method according to claim 3, wherein the information about the at least one receive beam associated with the first propagation path comprises at least one of the following: a beam identifier, an angle value, or an angle range of the at least one receive beam associated with the first propagation path.

5. The method according to claim 3 or 4, wherein the at least one receive beam is a path-level receive beam.

6. The method according to any one of claims 1 and 3 to 5, wherein the method further comprises:
measuring, by the first device, a positioning reference signal from the second device, to obtain a second measurement result, wherein the second measurement result corresponds to a second propagation path, and the second propagation path is a propagation path between the first device and the second device; and
sending, by the first device, the second measurement result and information about the second propagation path to the positioning device.

7. The method according to claim 6, wherein an association between the information about the second propagation path and the information about the first propagation path indicates an association between the first measurement result and the second measurement result.

8. The method according to claim 7, wherein when the information about the second propagation path is partially or completely the same as the information about the first propagation path, it indicates that the first measurement result is associated with the second measurement result; or
when the information about the second propagation path is partially or completely different from the information about the first propagation path, it indicates that the first measurement result is not associated with the second measurement result.

9. The method according to any one of claims 2 to 5, wherein the method further comprises:
receiving, by the positioning device, a second measurement result and information about a second propagation path from the first device, wherein the second measurement result is a measurement result obtained by the first device by measuring a positioning reference signal sent by the second device, the second measurement result corresponds to the second propagation path, and the second propagation path is a propagation path between the first device and the second device; and
positioning, by the positioning device, the first device or the second device based on the first measurement result and the information about the first propagation path comprises:
positioning, by the positioning device, the first device or the second device based on the first measurement result, the second measurement result, the information about the first propagation path, and the information about the second propagation path.

10. The method according to claim 9, wherein positioning, by the positioning device, the first device or the second device based on the first measurement result, the second measurement result, the information about the first propagation path, and the information about the second propagation path comprises:
when the information about the second propagation path is partially or completely the same as the information about the first propagation path, determining, by the positioning device, that the first measurement result is associated with the second measurement result, and positioning, by the positioning device, the first device or the second device based on the first measurement result and the second measurement result; or
when the information about the second propagation path is partially or completely different from the information about the first propagation path, determining, by the positioning device, that the first measurement result is not associated with the second measurement result, and positioning, by the positioning device, the first device or the second device separately based on the first measurement result or the second measurement result.

11. A first communication apparatus, wherein the first communication apparatus comprises:
a processing module, configured to measure a positioning reference signal sent by a second device, to obtain a first measurement result, wherein the first measurement result corresponds to a first propagation path, and the first propagation path is a propagation path between the first communication apparatus and the second device; and
a transceiver module, configured to send the first measurement result and information about the first propagation path to a second communication apparatus.

12. A second communication apparatus, wherein the second communication apparatus comprises:
a transceiver module, configured to receive a first measurement result and information about a first propagation path from a first communication apparatus, wherein the first measurement result is a measurement result obtained by the first communication apparatus by measuring a positioning reference signal sent by a second device, the first measurement result corresponds to the first propagation path, and the first propagation path is a propagation path between the first communication apparatus and the second device; and
a processing module, configured to position the first communication apparatus or the second device based on the first measurement result and the information about the first propagation path.

13. The first communication apparatus according to claim 11 or the second communication apparatus according to claim 12, wherein the information about the first propagation path comprises at least one of the following:
a label of the first propagation path;
an identifier of the first propagation path;
a random value of the first propagation path;
a name of the first propagation path;
information about a reflector associated with the first propagation path;
information about a reflective surface associated with the first propagation path;
a temporary identifier RPTI of the first propagation path;
a priority of the first propagation path; or
information about at least one receive beam associated with the first propagation path.

14. The first communication apparatus or the second communication apparatus according to claim 13, wherein the information about the at least one receive beam associated with the first propagation path comprises at least one of the following: a beam identifier, an angle value, or an angle range of the at least one receive beam associated with the first propagation path.

15. The first communication apparatus or the second communication apparatus according to claim 13 or 14, wherein the at least one receive beam is a path-level receive beam.

16. The first communication apparatus according to any one of claims 11 and 13 to 15, wherein the processing module is further configured to:
measure a positioning reference signal from the second device, to obtain a second measurement result, wherein the second measurement result corresponds to a second propagation path, and the second propagation path is a propagation path between the first communication apparatus and the second device; and
the transceiver module is further configured to send the second measurement result and information about the second propagation path to the second communication apparatus.

17. The first communication apparatus according to claim 16, wherein an association between the information about the second propagation path and the information about the first propagation path indicates an association between the first measurement result and the second measurement result.

18. The first communication apparatus according to claim 17, wherein when the information about the second propagation path is partially or completely the same as the information about the first propagation path, it indicates that the first measurement result is associated with the second measurement result; or
when the information about the second propagation path is partially or completely different from the information about the first propagation path, it indicates that the first measurement result is not associated with the second measurement result.

19. The second communication apparatus according to any one of claims 12 to 15, wherein the transceiver module is further configured to:
receive a second measurement result and information about a second propagation path from the first communication apparatus, wherein the second measurement result is a measurement result obtained by the first communication apparatus by measuring a positioning reference signal sent by the second device, the second measurement result corresponds to the second propagation path, and the second propagation path is a propagation path between the first communication apparatus and the second device; and
the processing module is specifically configured to:
position the first communication apparatus or the second device based on the first measurement result, the second measurement result, the information about the first propagation path, and the information about the second propagation path.

20. The second communication apparatus according to claim 19, wherein the processing module is specifically configured to:
when the information about the second propagation path is partially or completely the same as the information about the first propagation path, determine that the first measurement result is associated with the second measurement result, and position the first communication apparatus or the second device based on the first measurement result and the second measurement result; or
when the information about the second propagation path is partially or completely different from the information about the first propagation path, determine that the first measurement result is not associated with the second measurement result, and position the first communication apparatus or the second device separately based on the first measurement result or the second measurement result.

21. A communication apparatus, wherein the communication apparatus comprises a processor, and the processor is configured to execute a computer program or computer instructions in a memory, to perform the method according to any one of claims 1 to 10.

22. The communication apparatus according to claim 21, wherein the communication apparatus further comprises the memory.

23. A computer-readable storage medium, wherein the computer-readable storage medium stores a computer program; and when the computer program is executed by a communication apparatus, the communication apparatus is enabled to perform the method according to any one of claims 1 to 10.
